(19) Europäisches Patentamt
European Patent Office
Office européen des brevets

(11) **EP 3 783 420 A1**

(12) **EUROPÄISCHE PATENTANMELDUNG**

(43) Veröffentlichungstag:
**24.02.2021 Patentblatt 2021/08**

(51) Int Cl.:
***G02C 7/02*** (2006.01)  ***G02B 1/115*** (2015.01)
***B29D 11/00*** (2006.01)  ***G02C 7/10*** (2006.01)

(21) Anmeldenummer: **19192734.2**

(22) Anmeldetag: **21.08.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Carl Zeiss Vision International GmbH**
**73430 Aalen (DE)**

(72) Erfinder:
• **VON BLANCKENHAGEN, Bernhard**
**73433 Aalen (DE)**
• **AZIZ, Emad Flear**
**14532 Kleinmachnow (DE)**

(74) Vertreter: **Louis Pöhlau Lohrentz**
**Patentanwälte**
**Postfach 30 55**
**90014 Nürnberg (DE)**

(54) **BRILLENGLAS MIT FILTERWIRKUNG FÜR BLAUES LICHT UND BRILLE**

(57) Die Erfindung betrifft Brillenglas für ein Auge eines Brillenträgers mit einer Vorderfläche und einer Rückfläche, wobei die Vorderfläche des Brillenglases dem Auge abgewandt ist und die Rückfläche des Brillenglases dem Auge zugewandt ist und wobei das Brillenglas ein optisches Linsensubstrat aus oder mit mineralischem Glas und/oder organischem Glas umfasst, wobei das Brillenglas wenigstens eine erste Antireflexionsbeschichtung und wenigstens eine zweite Antireflexionsbeschichtung aufweist, wobei die wenigstens eine erste Antireflexionsbeschichtung eine Filterwirkung für blaues Licht aufweist. Die Erfindung betrifft ferner eine Brille, die das Brillenglas enthält.

**Fig. 5**

**EP 3 783 420 A1**

**Beschreibung**

Die vorliegende Erfindung betrifft ein Brillenglas mit einer Filterwirkung für blaues Licht sowie eine Brille umfassend wenigstens ein Brillenglas mit einer Filterwirkung für blaues Licht.

Der Schlaf-Wach-Rhythmus unterliegt beim Menschen sowie bei vielen Tierarten endogenen Rhythmen, deren Periodenlänge etwa 24 Stunden beträgt. Dieser Rhythmus wird in der Chronobiologie als zirkadiane Rhythmik bezeichnet. Die genaue Periodenlänge kann variieren, beträgt meistens jedoch 22 bis 25 Stunden. Der zirkadiane Rhythmus wird von äußeren Reizen, die auch als Zeitgeber bezeichnet werden, beeinflusst. Ein wesentlicher äußerer Reiz ist dabei das Licht. Andere Zeitgeber können beispielsweise auch die Umgebungstemperatur oder soziale Reize sein.

Melatonin ist ein körpereigenes Hormon, das in der Zirbeldrüse bzw. Epiphyse im Gehirn produziert wird. Die Bildung von Melatonin wird dabei durch Licht gehemmt. In der Dunkelheit wird diese Hemmung aufgehoben und es kommt zur Synthese und Sekretion von Melatonin. Außerhalb der Zirbeldrüse wird Melatonin auch im Darm und in der Netzhaut des Auges synthetisiert. In der Nacht steigt die Melatoninkonzentration im Blut etwa um den Faktor 3 bis 12. Bei älteren Menschen liegt der Anstieg der Melatoninkonzentration eher im unteren Bereich und bei jungen Menschen ist der Anstieg der Melatoninkonzentration eher im oberen Bereich. Ein erhöhter Spiegel an Melatonin führt zur Müdigkeit beim Menschen und ist mithin ein wesentlicher Faktor für einen gesunden Schlaf.

Der Blauanteil im Umgebungslicht hat dabei einen wesentlichen Einfluss auf die endogene Synthese von Melatonin. Mit dem Sonnenuntergang kommt es zunächst zu einer spektralen Änderung des Umgebungslichtes in Richtung rot, mithin in Richtung des längerwelligen Anteils von Sonnenlicht, bevor es schließlich dunkel wird. Das natürliche Licht der Sonne liegt in einem Wellenlängenbereich von etwa 380 nm bis etwa 780 nm. Der Blaulichtanteil erstreckt sich dabei über einen Spektralbereich von etwa 380 nm bis etwa 500 nm.

Sofern der Mensch Lichtquellen ausgesetzt ist, die Licht mit einem wesentlichen Anteil an blauem Licht, insbesondere von blauem Licht im Bereich von 464 nm, ausstrahlen, kommt es zu einer Hemmung der Synthese von Melatonin. Infolgedessen bleibt der Mensch wach oder wird wieder wach.

Es ist bekannt, dass der Schlaf-Wach-Rhythmus des Menschen durch den Blaulichtanteil im Bildschirmlicht von beispielsweise stationären oder mobilen Bildschirmen oder Displays oder allgemein im LED-Licht gestört wird. Aufgrund des Blaulichtanteils kommt es zu einer Hemmung der Synthese von körpereigenem Melatonin, wodurch der Mensch wach wird, mithin nicht schlafen kann.

Um etwaigen Schlafstörungen, insbesondere bei älteren Menschen, vorzubeugen wird auch die Einnahme von Melatonin verordnet. In Deutschland ist die Abgabe von Melatonin rezeptpflichtig. In den USA hingegen ist Melatonin ohne jegliche Einschränkung in Drogerien erhältlich. Da jedoch die Langzeitwirkung einer Einnahme von Melatonin noch nicht ausreichend erforscht ist, wird allgemein von einer länger andauernden Einnahme von Melatonin abgeraten.

Aus der WO 2008/067109 A1 ist bekannt, den Anteil von blauem Licht im Umgebungslicht unter Verwendung eines ophthalmischen Systems, wie beispielsweise eines Brillenglases, zu verringern. Dieses ophthalmische System weist einen selektiven Lichtwellenlängenfilter auf, durch den der Anteil an blauem Licht im Umgebungslicht signifikant verringert wird. Der selektive Filter wird dabei durch Verwendung eines Farbstoffes oder eines Pigmentes in einer Beschichtung gebildet. Als Farbstoffe werden beispielsweise Perylen, Porphyrin, Cumarin, Acridin oder Derivate davon verwendet. Alternativ kann der selektive Filter auch Melanin, Lutein oder Zeaxanthin enthalten. Das ophthalmische System gemäß der Lehre der WO 2008/067109 A1 weist dabei einen komplizierten Aufbau mit einer Filterschicht für blaues Licht und einer Farbausgleichsschicht auf. Ohne diese Farbausgleichsschicht kommt es bei einem Brillenträger bei der Farbwahrnehmung zu einer spektralen Verschiebung, die sich beispielsweise in einem Gelbstich oder Orangestich, bemerkbar macht. Des Weiteren umfasst der Filter für blaues Licht nachteiligerweise organische Farbstoffe oder organische Pigmente, deren Struktur bei harschen Umgebungsbedingungen, wie beispielsweise erhöhter Temperatur, intensiver Lichteinstrahlung, etc., geschädigt werden können. Auch ist die gleichmäßige Einarbeitung der angegebenen organischen Farbstoffe und Pigmente in die Beschichtung eines Brillenglases mit einem erhöhten verfahrenstechnischen Aufwand verbunden.

WO 2013/171434 A1 offenbart ein Brillenglas, welches durch einen Filter auf wenigstens einer der Oberflächen, die zirkadiane Rhythmik nicht verändern soll. Dieser Filter soll der wenigstens einen Oberfläche, welche den Filter umfasst, einen durchschnittlichen Reflexionsfaktor im Blau ($R_{m,B}$) von $\geq$ 5% in einem Wellenlängenbereich von 420 nm bis 450 nm für einen Einfallswinkel zwischen 0° und 15°verleihen. Die Reflektivitätskurve dieses Filters soll für einen Einfallswinkel zwischen 0° und 15° ein Reflexionsmaximum bei einer Wellenlänge unter 435 nm, eine Halbwertsbreite (FWHM) von $\geq$ 80 nm sowie für einen Einfallswinkel $\theta$ zwischen 0° und 15° und für einen Einfallswinkel $\theta'$ zwischen 30° und 45° einen Parameter $\Delta(\theta, \theta') = 1-[R_{\theta'}(435\,nm)/R_{\theta}(435\,nm)] \geq 0{,}6$ aufweisen. Die in WO 2013/171434 A1 beschriebene Reflektivitätskurve und die dort beispielhaft genannten Schichtaufbauten verfolgen das Ziel, phototoxisches blaues Licht durch Reflexion zu reduzieren und den Spektralbereich des blauen Lichts, der Einfluss auf den zirkadianen Rhythmus nimmt, nicht zu beeinflussen. Im Unterschied hierzu, hat die vorliegende Erfindung gerade zum Ziel die Transmission eines Brillenglases gerade in diesem Spektralbereich des blauen Lichts zu verändern.

Aufgabe der vorliegenden Erfindung ist es, ein Brillenglas mit verbessertem und/oder alternativem Filter für blaues Licht bereitzustellen. Durch das Brillenglas mit verbessertem und/oder alternativem Filter für blaues Licht soll es vorzugsweise bei einem Brillenträger bei der Farbwahrnehmung zu keiner spektralen Farbverschiebung kommen. Ferner besteht ein Bedarf an Brillengläsern mit einem langzeitstabilen Filter für blaues Licht, die vorzugsweise verfahrenstechnisch einfach herzustellen sind.

Die der Erfindung zugrunde liegende Aufgabe wird durch Bereitstellung eines Brillenglases für ein Auge eines Brillenträgers mit einer Vorderfläche und einer Rückfläche gelöst, wobei die Vorderfläche des Brillenglases dem Auge abgewandt ist und die Rückfläche des Brillenglases dem Auge zugewandt ist und wobei das Brillenglas ein optisches Linsensubstrat aus oder mit mineralischem Material und/oder organischem Material umfasst, wobei das Brillenglas wenigstens eine erste Antireflexionsbeschichtung und wenigstens eine zweite Antireflexionsbeschichtung aufweist, wobei die wenigstens eine erste Antireflexionsbeschichtung eine Filterwirkung für blaues Licht in einem Wellenlängenbereich von 430 nm bis 530 nm oder in einem Wellenlängenbereich von 400 nm bis 500 nm aufweist.

Bevorzugte Weiterbildungen des erfindungsgemäßen Brillenglases sind in den Ansprüchen 2 bis 14 angegeben.

Die vorliegende Erfindung betrifft auch ein Verfahren zur Herstellung eines Brillenglases mit wenigstens einer ersten Antireflexionsbeschichtung gemäß Anspruch 15.

Das erfindungsgemäße Brillenglas ist dadurch gekennzeichnet, dass es wenigstens eine, vorzugsweise eine einzige, Antireflexionsbeschichtung mit einer Filterwirkung für blaues Licht aufweist. Diese als erste Antireflexionsbeschichtung bezeichnete Schicht weist außerhalb des gefilterten bzw. reflektierten Blauanteils vorzugsweise eine hohe Transmission im Wellenlängenbereich des sichtbaren Lichts zwischen 380 nm und 780 nm auf.

Unter einer "Filterwirkung für blaues Licht" wird im Sinne der Erfindung verstanden, dass der durch das erfindungsgemäße Brillenglas gelangende Blaulichtanteil des sichtbaren Wellenlängenspektrums verringert ist. Diese Verringerung kann auf Interferenzeffekte zurückzuführen sein. Die Verringerung des Blaulichtanteils kann auch auf eine Reflexion des Blaulichtanteils zurückzuführen sein. Vorzugsweise erfolgt die Verringerung des Blaulichtanteils im sichtbaren Wellenlängenbereich durch eine erhöhte Reflexion an der wenigstens einen ersten Antireflexionsbeschichtung des erfindungsgemäßen Brillenglases. Für den vom reflektierten Blaulichtanteil verschiedenen Wellenlängenbereich des sichtbaren Lichts weist die wenigstens eine erste Antireflexionsbeschichtung keine wesentliche, vorzugsweise keine, Reflexion, sondern eine nahezu vollständige, vorzugsweise vollständige, Transmission auf.

Mithin weist das erfindungsgemäße Brillenglas vorzugsweise eine Transmission sowohl im, in Bezug auf die Wellenlänge des blauen Lichts, kurzwelligeren Violett-Bereich, als auch im, in Bezug auf die Wellenlänge des blauen Lichts, langwelligeren, Grünlich-Blau-Bereich, Cyanbereich, Bläulich-Grün-Bereich, Grünbereich, Gelblich-Grün-Bereich, Gelb-Grün-Bereich, Grünlich-Gelb-Bereich, Gelbbereich, Gelblich-Orange-Bereich, Orange-Bereich, Rötlich-Orange-Bereich, und Rotbereich auf.

Die Farben des sichtbaren Lichtes liegen in den in Tabelle 1 angegebenen Wellenlängenbereichen.

**Tabelle 1:**

| Farbe | Wellenlängenbereich [nm] |
|---|---|
| Violett | 380-450 |
| Blau | 450-482 |
| Grünlich-Blau | 482-487 |
| Cyan (Blau) | 487-492 |
| Bläulich-Grün | 492-497 |
| Grün | 497-530 |
| Gelblich-Grün | 530-560 |
| Gelb-Grün | 560-570 |
| Grünlich-Gelb | 570-575 |
| Gelb | 575-580 |
| Gelblich-Orange | 580-585 |
| Orange | 585-595 |
| Rötlich-Orange | 595-620 |
| Rot | 620-780 |

Die wenigstens eine erste Antireflexionsbeschichtung weist eine Filterwirkung für blaues Licht, vorzugsweise in einem Wellenlängenbereich von 430 nm bis 530 nm, vorzugsweise von 440 nm bis 500 nm, vorzugsweise von 450 nm bis 490 nm, weiter bevorzugt von 453 nm bis 480 nm, weiter bevorzugt von 457 nm bis 475 nm, oder vorzugsweise in einem Wellenlängenbereich von 400 nm bis 500 nm, vorzugsweise von 410 nm bis 490 nm, vorzugsweise von 420 nm bis 480 nm, weiter bevorzugt von >430 nm bis 470 nm und weiter bevorzugt von 440 nm bis 465 nm, auf. Im jeweils übrigen Wellenlängenbereich des sichtbaren Lichts zwischen 380 nm und 780 nm weist die erste Antireflexionsbeschichtung des erfindungsgemäßen Brillenglases eine hohe Transmission, vorzugsweise in einem Bereich von wenigstens 70% bis 100%, weiter vorzugsweise von wenigstens 80% bis 99%, weiter vorzugsweise von wenigstens 90% bis 98%, weiter vorzugsweise von 95% bis 97%, auf, wobei die Filterwirkung für blaues Licht in den angegebenen Wellenlängenbereichen vorzugsweise in einem Bereich von 5% bis 40%, weiter vorzugsweise von 8% bis 35%, noch weiter vorzugsweise von 10% bis 30%, noch weiter vorzugsweise von 12% bis 28%, liegt.

Der Wert für die Transmission in [%] bezieht sich dabei auf das Verhältnis der Beleuchtungsstärke des durch die wenigstens eine erste Antireflexionsbeschichtung transmittierten Lichts ($I_{trans}$) in Bezug auf die Beleuchtungsstärke des eingestrahlten Lichts ($I_{ein}$) gemäß Formel (I):

$$\text{Transmission in [\%]} = I_{trans}/I_{ein} \times 100 \qquad\qquad (I).$$

Der Wert für die Filterwirkung für blaues Licht in [%] berechnet sich aus der Beleuchtungsstärke des durch die wenigstens eine erste Antireflexionsbeschichtung transmittierten blauen Lichts ($I_{trans,blau}$) und der Beleuchtungsstärke des eingestrahlten blauen Lichts ($I_{ein,blau}$) gemäß Formel (II):

$$\text{Filterwirkung in [\%]} = (1-I_{trans,blau})/I_{ein,blau} \times 100 \qquad\qquad (II).$$

Bei den vorliegend berechneten und/oder gemessenen Transmissionswerten handelt es sich um arithmetische Mittelwerte, wobei die wellenlängenabhängigen Transmissionswerte über den betrachteten Wellenlängenbereich durch arithmetische Mittelung erhalten sind.

Die erste Antireflexionsbeschichtung weist bevorzugt in einem Wellenlängenbereich von 430 nm bis 530 nm, vorzugsweise von 440 nm bis 500 nm, vorzugsweise von 450 nm bis 490 nm, weiter bevorzugt von 453 nm bis 480 nm, weiter bevorzugt von 457 nm bis 475 nm, oder vorzugsweise in einem Wellenlängenbereich von 400 nm bis 500 nm, vorzugsweise von 410 nm bis 490 nm, vorzugsweise von 420 nm bis 480 nm, weiter bevorzugt von >430 nm bis 470 nm und weiter bevorzugt von 440 nm bis 465 nm wenigstens ein Maximum der Reflektivitätskurve auf. Dieses wenigstens ein Maximum der Reflektivitätskurve ist hierbei ein Maximalwert der Reflexionskurve in vorstehend genannten Wellenlängenbereichen und weist einen Reflexionswert von bevorzugt $\geq$ 4% auf. An der Stelle des Maximalwerts ist die 1. Ableitung der Funktion Reflexion als Funktion der Wellenlänge gleich 0. In vorstehend genannten Wellenlängenbereichen liegt die Halbwertsbreite (FWHM) der Reflektivitätskurve jeweils bevorzugt in einem Bereich von 20 nm bis $\leq$ 70 nm, weiter bevorzugt in einem Bereich von 25 nm bis $\leq$ 65 nm, besonders bevorzugt in einem Bereich von 30 nm bis $\leq$ 60 nm und ganz besonders in einem Bereich von 35 nm bis $\leq$ 55 nm.

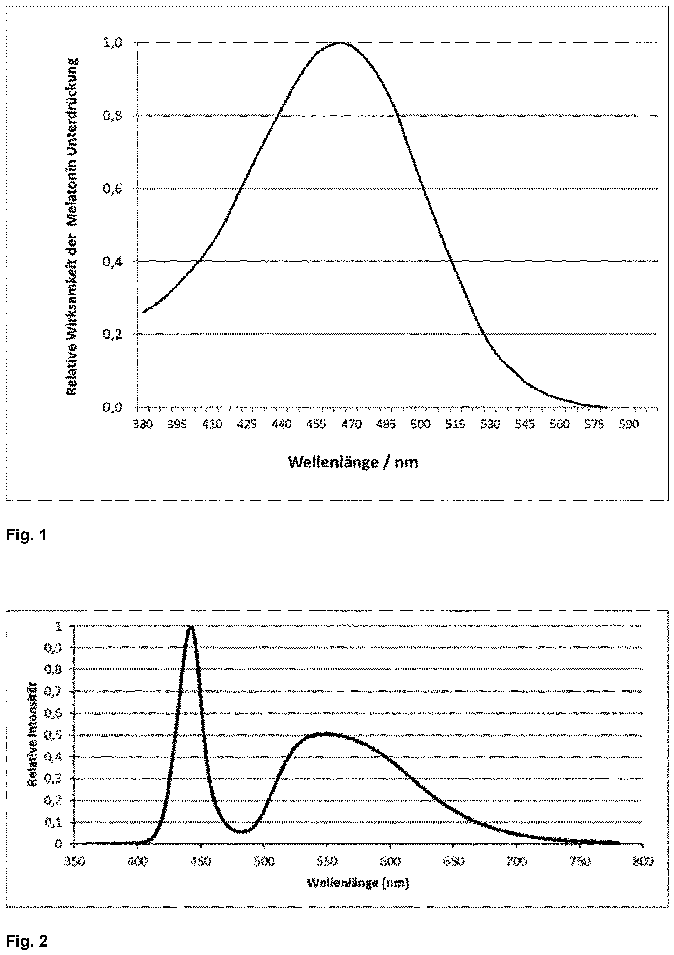

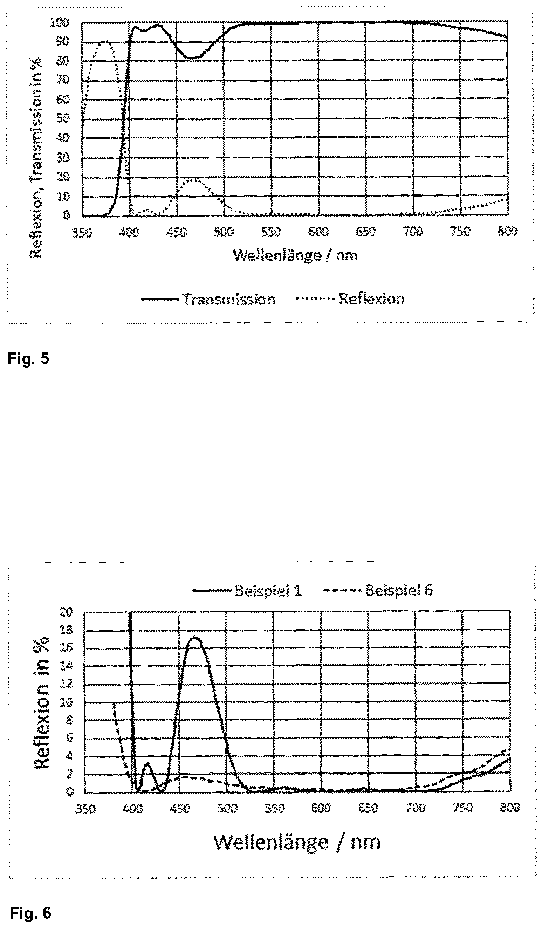

Erfindungsgemäß weist die wenigstens eine erste Antireflexionsbeschichtung eine Filterwirkung in dem Wellenlängenbereich des Blaulichtanteils des Lichtspektrums auf, der im Wesentlichen zur Unterdrückung der Melatoninbildung führt. Die maximale Unterdrückung der Melatoninbildung erfolgt bei einer Wellenlänge von 464 nm (George C. Brainard et al., Action Spectrum for Melatonin Regulation in Humans: Evidence for a Novel Circadian Photoreceptor, The Journal of Neuroscience, August 15, 2001, 21(16):6405-6412, insbesondere Figur 5). Nimmt man als Quelle für blaues Licht das blaue Emissionsmaximum einer weißen LED für allgemeine Beleuchtungswecke an, siehe Figur 2, fällt auf, dass dieses bei einer Wellenlänge von 450 nm liegt. Dies ist 14 nm in Bezug auf die Wellenlänge der maximalen Unterdrückung der Melatoninbildung verschoben. Da der spektrale Verlauf der Melatoninunterdrückung sehr breit ist und auch bei 450 nm mehr als 90 % des Wertes im Vergleich zu 464 nm beträgt, siehe Figur 1, ist es für die Gesamtwirkung auf die Melatoninunterdrückung besser, das Maximum der Reflektivität der ersten Antireflexionsbeschichtung auf 450 nm zu legen. Letzteres ist insbesondere dann bevorzugt, wenn man für die Anwendung der ersten Antireflexionsbeschichtung Umgebungen mit LED-Beleuchtung betrachtet. Die Erfinder haben festgestellt, dass es überraschenderweise möglich ist, den Blaulichtanteil nur in einem engen Wellenlängenbereich um 464 nm und/oder um 450 nm zu verringern, so dass zum einen der Hemmung der Melatoninsynthese entgegengewirkt wird und zum anderen vorzugsweise das von einem Brillenträger wahrgenommene Farbspektrum nicht merklich, vorzugsweise nicht, verändert ist, so dass der Brillenträger vorzugsweise keinen Gelbstich wahrnimmt.

Unter einem engen Wellenlängenbereich um 464 nm ist ein Wellenlängenbereich mit einer Halbwertsbreite (FWHM) aus einem Bereich von bevorzugt $\leq$ 70 nm, weiter bevorzugt $\leq$ 65 nm, besonders bevorzugt $\leq$ 55 nm und ganz besonders bevorzugt $\leq$ 50 nm, jeweils bei einem Reflexionsmaximum von 464 nm, zu verstehen.

Unter einem engen Wellenlängenbereich um 450 nm ist ein Wellenlängenbereich mit einer Halbwertsbreite (FWHM) aus einem Bereich von bevorzugt ≤ 55 nm, weiter bevorzugt ≤ 50 nm, besonders bevorzugt ≤ 45 nm und ganz besonders bevorzugt ≤ 40 nm, jeweils bei einem Reflexionsmaximum von 450 nm, zu verstehen.

Gemäß einer bevorzugten Variante der Erfindung weist das erfindungsgemäße Brillenglas einen Gelbwert G von nicht mehr als 12, weiter vorzugsweise von nicht mehr als 11, weiter vorzugsweise von nicht mehr als 10, weiter vorzugsweise von nicht mehr als 9, weiter vorzugsweise von nicht mehr als 8, weiter vorzugsweise von nicht mehr als 7, weiter vorzugsweise von nicht mehr als 6, auf. Der Gelbwert G wird dabei gemäß DIN 6167 (Januar 1980), Gleichung 1, (siehe nachstehende Formel (IV)),

$$G = \frac{a \cdot X - b \cdot Z}{Y} \cdot 100 \qquad\qquad \text{(IV)}$$

berechnet. Die in die Gleichung eingehenden Normfarbwerte X, Y, Z werden aus dem Transmissionsspekrum berechnet. Die Faktoren a und b sind der in der DIN 6167 (Januar 1980) angegebenen Tabelle (siehe nachstehend Tabelle (4)) zu entnehmen:

**Tabelle (4)**

| Normlichtart [1] | D 65 | D 65 | C |
|---|---|---|---|
| Normalbeobachter [2] | 10° | 2° | 2° |
| *a* | 1,301 | 1,298 | 1,277 |
| *b* | 1,149 | 1,133 | 1,059 |
| [1] Siehe DIN 5033 Teil 7 [2] Siehe DIN 5033 Teil 2 | | | |

Gemäß einer bevorzugten Ausführungsform der Erfindung liegt der maximale Gelbwert G bei dem erfindungsgemäßen Brillenglas in einem Bereich von 6 bis 12, vorzugsweise von 8 bis 11.

Erfindungsgemäß ist bevorzugt, dass die Reflektivität der ersten Antireflexionsbeschichtung gering bleibt, so dass der Brillenträger nicht durch Reflexe des Brillenglases gestört wird. Die Reflektivität wird über den Wert des Lichtreflexionsgrads nach DIN EN ISO 13666:2013-10, Kapitel 15.7 definiert (siehe nachstehende Formel (V)):

$$\rho_V = \frac{\Phi_R}{\Phi_l} = 100 \times \frac{\int_{380\,nm}^{780\,nm} \rho(\lambda) \cdot V(\lambda) \cdot S_{D65}(\lambda) \cdot d\lambda}{\int_{380\,nm}^{780\,nm} V(\lambda) \cdot S_{D65}(\lambda) \cdot d\lambda} \, \%$$

$$\text{(V)},$$

wobei

$\Phi_l$     der auftreffende Lichtstrom;
$\Phi_R$    der reflektierte Lichtstrom ist.

Der Wert des Lichtreflexionsgrads des Brillenglases beträgt vorzugsweise < 3,5 %, weiter vorzugsweise < 3 %, noch weiter vorzugsweise < 2,5%, noch weiter vorzugsweise < 2,35 %, noch weiter vorzugsweise < 2,0 %.

Wie aus Tabelle 1 ersichtlich, untergliedert sich der Blaulichtanteil, in einen reinen Blauanteil im Bereich von 450 nm bis 482 nm und in weitere bläuliche Anteile, die beispielsweise als Grünlich-Blau, Cyan und Bläulich-Grün bezeichnet werden. Mithin wird bei einer Verringerung des Blaulichtanteils im Bereich von 450 nm bis 482 nm, sowie optional des an den reinen Blaulichtanteil unmittelbar angrenzenden kürzerwelligen und längerwelligen bläulichen Spektralbereichs, der Farbton Blau nicht vollständig herausgefiltert, so dass es für einen Brillenträger zu keiner wesentlichen Verschiebung im wahrgenommenen Farbspektrum, vorzugsweise nicht in den gelblichen Wellenlängenbereich, kommt.

Im Hinblick auf die Filterwirkung der ersten Antireflexionsbeschichtung mit Filterwirkung für blaues Licht in einem äußerst engen Bereich um die Wellenlänge von 464 nm und/oder 450 nm wird spezifisch die Beleuchtungsstärke in dem Wellenlängenbereich verringert, der für die Unterdrückung der Melatoninsynthese wesentlich ist. Insbesondere ist vorteilhaft, dass nicht der gesamte Blaulichtanteil des sichtbaren Lichtes herausgefiltert wird, sondern lediglich eine selektive Verringerung der Beleuchtungsstärke der Blaulichtanteile, die zu einer Unterdrückung der Melatoninsynthese führen.

Im Unterschied zur Lehre der WO 2008/067109 ist mithin die Anordnung einer Farbausgleichsschicht nicht erforderlich, um einer wesentlichen spektralen Verschiebung bei einem Farbeindruck eines Brillenträgers, beispielsweise in Form eines signifikanten Gelbstichs oder eines Orangestichs, entgegenwirken zu müssen.

Äußerst vorteilhaft weist die wenigstens eine erste Antireflexionsbeschichtung des erfindungsgemäßen Brillenglases sowohl die vorstehend spezifizierte Filterwirkung für blaues Licht als auch eine Antireflexionswirkung für den übrigen Wellenlängenbereich des sichtbaren Lichtes auf. Somit wird der übrige Wellenlängenbereich des sichtbaren Lichts im Wesentlichen ungehindert, vorzugsweise ungehindert, durch die wenigstens eine erste Antireflexionsbeschichtung transmittiert.

Gemäß einer bevorzugten Weiterbildung des erfindungsgemäßen Brillenglases erfolgt die Filterwirkung für blaues Licht nicht auf Basis von in der wenigstens einen ersten Antireflexionsbeschichtung enthaltenen Farbstoffen und/oder Farbpigmenten. Gemäß einer bevorzugten Ausführungsform der Erfindung weist das erfindungsgemäße Brillenglas keine Farbmittel, insbesondere keine Farbstoffe und/oder Farbpigmente, die blaues Licht absorbieren, auf. Mithin weist das erfindungsgemäße Brillenglas im Hinblick auf die bevorzugte Abwesenheit von Farbmitteln, die blaues Licht absorbieren, eine signifikante Langzeitstabilität von bevorzugt ≥ 3 Jahren in Bezug auf die Filterwirkung für blaues Licht auf.

Gemäß einer weiter bevorzugten Ausführungsform der Erfindung erfolgt die Filterwirkung für blaues Licht in der wenigstens einen ersten, vorzugsweise einzigen ersten, Antireflexionsbeschichtung auf Basis von Reflexion und/oder Interferenz, beispielsweise von teilweise konstruktiver Interferenz, vorzugsweise in dem Wellenlängenbereich von 430 nm bis 530 nm, weiter vorzugsweise von 440 nm bis 500 nm, weiter vorzugsweise von 450 nm bis 490 nm, weiter bevorzugt von 453 nm bis 480 nm, weiter bevorzugt von 457 nm bis 475 nm oder vorzugsweise in einem Wellenlängenbereich von 400 nm bis 500 nm, vorzugsweise von 410 nm bis 490 nm, vorzugsweise von 420 nm bis 480 nm, weiter bevorzugt von >430 nm bis 470 nm und weiter bevorzugt von 440 nm bis 465 nm. Die wenigstens eine erste Antireflexionsbeschichtung mit Filterwirkung für blaues Licht weist vorzugsweise eine erhöhte Reflexion im Bereich des blauen Lichts und eine erhöhte Transmission für den außerhalb des reflektierten Blaulichtanteiles liegenden Spektralbereich des sichtbaren Lichts auf.

Die Lage des Maximums der Reflexionskurve um 464 nm der ersten Antireflexionsbeschichtung mit Filterwirkung für blaues Licht kann dabei auch vorzugsweise um bis zu 15 nm zu kürzeren Wellenlängen als 464 nm verschoben sein. Mit der Wahl von kürzeren Wellenlängen kann auf Variationen der Emissionsmaxima von blauem Licht bei technischer Beleuchtung (LEDs) oder bei Displays reagiert werden. Das Maximum ist hierbei ein Maximalwert der Reflexionskurve im Spektralbereich 405 nm bis 550 nm mit einem Reflexionswert von ≥ 4%. An der Stelle des Maximalwerts ist die 1. Ableitung der Funktion Reflexion als Funktion der Wellenlänge gleich 0.

Die Unterdrückung der Melatoninsynthese bzw. Melatoninsekretion beginnt bei einer Beleuchtungsstärke von etwa 30 Lux. Die Kurve der Unterdrückung der Melatoninsynthese ist in Abhängigkeit von der Beleuchtungsstärke eine sigmoide Kurve. Zwischen etwa 100 Lux und etwa 1000 Lux liegt ein nahezu lineares Verhältnis zwischen der Beleuchtungsstärke und der Unterdrückung der Melatoninsynthese vor. Ab etwa 1000 Lux geht die Kurve der Unterdrückung der Melatoninsynthese in einen Plateaubereich über.

Die Beleuchtungsstärke erreicht unter Tageslichtbedingungen Werte zwischen etwa 19000 Lux und 100000 Lux. Bei einer künstlichen Beleuchtung hingegen werden üblicherweise Beleuchtungsstärken im Bereich von 100 Lux bis 500 Lux erreicht.

Mithin kann bei einer künstlichen Beleuchtung bzw. bei Kunstlicht, wie beispielsweise dem Licht einer LED, eines Bildschirms eines Computers oder eines mobilen Endgerätes, etc., und Filterung bzw. Verringerung des Blaulichtanteiles durch Verwendung eines erfindungsgemäßen Brillenglases oder einer Brille, welche wenigstens ein erfindungsgemäßes Brillenglas umfasst, der Inhibierung der Synthese von Melatonin wirksam entgegengewirkt werden.

Unter Tageslichtbedingungen in einem Bereich von 19000 Lux bis 100000 Lux ist eine etwaige Filterung bzw. Verringerung des Blaulichtanteils von untergeordneter Bedeutung bzw. wirkungslos, so dass die während der Tageslichtphase gewünschte Unterdrückung der Melatoninsynthese nicht beeinträchtigt wird, da die sigmoide Kurve der Unterdrückung der Melatoninsynthese weit im Plateaubereich ist.

Bei Kunstlicht mit einer Beleuchtungsstärke im Bereich von etwa 100 Lux bis 1000 Lux kommt es hingegen bei einem Träger einer Brille, welche wenigstens ein erfindungsgemäßes Brillenglas umfasst, bzw. des erfindungsgemäßen Brillenglases aufgrund der wenigstens einen ersten Antireflexionsbeschichtung mit Filterwirkung für blaues Licht zu einer für den menschlichen Körper merklichen Verringerung des Blaulichtanteils im das Auge erreichenden eingestrahlten Licht. Aufgrund des verringerten Blaulichtanteils kommt es zu einer verringerten Hemmung der Synthese von Melatonin, d.h. zu einer verstärkten Synthese von Melatonin. Somit ermöglicht das Tragen des erfindungsgemäßen Brillenglases bzw. einer Brille, welche wenigstens ein erfindungsgemäßes Brillenglas umfasst, einen gesunden Schlaf, auch wenn der Mensch zuvor gegenüber Kunstlicht, wie es beispielsweise von Leuchtdioden (LED) oder von Beleuchtungsmitteln in Bildschirmen von Computern, Telefonen oder Tablet-Computern abgestrahlt wird, ausgesetzt war, da die Synthese bzw. Sekretion von Melatonin nicht unterdrückt wird.

Gemäß einer bevorzugten Ausführungsform weist die wenigstens eine erste Antireflexionsbeschichtung mit Filterwirkung für blaues Licht wenigstens zwei optisch transparente Schichten auf, wobei die optisch transparenten Schichten flächig übereinander und vorzugsweise unmittelbar aneinander angrenzend angeordnet sind, wobei die optisch transparenten Schichten im Wesentlichen aus dielektrischen Materialien, vorzugsweise Metalloxid oder mehreren Metalloxiden, bestehen, wobei wenigstens eine erste optisch transparente Schicht einen Brechungsindex $n_1$ und wenigstens eine zweite optisch transparente Schicht einen Brechungsindex $n_2$ aufweist und wobei sich der erste Brechungsindex $n_1$ und der zweite Brechungsindex $n_2$ um wenigstens 0,1 unterscheiden. Unter "aneinander angrenzend angeordnet" wird im Sinne der Erfindung verstanden, dass benachbarte Schichten unmittelbar, d.h. in flächigem Kontakt zueinander angeordnet sind.

Unter "optisch transparenter Schicht" oder "optisch transparenten Schichten" wird im Sinne der Erfindung verstanden, dass die Schicht bzw. die Schichten für Licht im sichtbaren Spektralbereich im Wesentlichen keine Strahlung, vorzugsweise keine Strahlung, absorbiert bzw. absorbieren. Unter im Wesentlichen keine Absorption wird auch eine etwaige geringe Absorption verstanden. Der sichtbare Spektralbereich erfasst einen Wellenlängenbereich von 380 nm bis 780 nm. Eine geringe Absorption ist ein Absorptionswert < 2%, bezogen auf die gesamte einfallende Lichtintensität.

Unter "transparent" wird für eine einzelne Schicht im Sinne der Erfindung verstanden, dass wenigstens 20 % des auf eine optisch transparente Schicht einfallenden sichtbaren Lichts durch die Schicht hindurchtritt. Vorzugsweise liegt die Transmission einer Schicht in einem Bereich von 25 % bis 100 %, weiter vorzugsweise von 30 % bis 98 %, weiter vorzugsweise von 40 % bis 95 %, weiter vorzugsweise von 45 % bis 90 %, weiter vorzugsweise von 50 % bis 85 %, weiter vorzugsweise von 55 % bis 80 %, weiter vorzugsweise von 60 % bis 75 %.

Bei der Anordnung wenigstens zweier optisch transparenter Schichten übereinander in einem Schichtpaket wird die Transmission durch die Interferenzeffekte bestimmt. Über den Spektralverlauf kann es mithin Wellenlängenbereiche mit hoher Transmission und Wellenlängenbereiche mit niedriger Transmission geben. Vorzugsweise weist ein Schichtpaket, das aus wenigstens zwei optisch transparenten Schichten besteht, eine Transmission von mehr als 20 %, vorzugsweise in einem gewünschten Wellenlängenbereich, auf. Vorzugsweise liegt die Transmission des gesamten Schichtpakets, im sichtbaren Spektralbereich außerhalb des gefilterten Blaulichtanteils, in einem Bereich von 25 % bis 100%, weiter vorzugsweise von 30 % bis 98%, weiter vorzugsweise von 40 % bis 95 %, weiter vorzugsweise von 45 % bis 90 %, weiter vorzugsweise von 50 % bis 85 %, weiter vorzugsweise von 55 % bis 80 %, weiter vorzugsweise von 60 % bis 75 %.

Der sichtbare Spektralbereich erfasst einen Wellenlängenbereich von 380 nm bis 780 nm. Unter "optisch transparenter Schicht" oder "optisch transparenten Schichten" wird im Sinne der Erfindung gemäß einer Ausführungsform der Erfindung weiter vorzugsweise verstanden, dass die Materialien, aus denen die Schichten aufgebaut sind, im sichtbaren Spektralbereich vorzugsweise nur eine geringe, weiter vorzugsweise keine, Absorption aufweisen.

Die optischen Eigenschaften der Materialien, aus denen die Schichten aufgebaut sind, werden im Hinblick auf die optischen Eigenschaften vorzugsweise durch den Brechungsindex n und weiter vorzugsweise durch den Absorptionsindex $k$ definiert. Optisch transparente Schichtmaterialien weisen im Spektralbereich, welcher durch die jeweilige Anwendung bestimmt wird, vorzugsweise einen Absorptionsindex $k < 0,008$, weiter bevorzugt von $k < 0,005$, weiter bevorzugt von $k < 0,003$, weiter bevorzugt von $k < 0,001$, auf. Im Sinne der Erfindung beziehen sich die Angaben der Brechungsindizes $n_1$ und $n_2$ und des Absorptionsindexes $k$ durchweg auf den jeweiligen bei einer Wellenlänge von 550 nm gemessenen Brechungsindex.

Der klassische Brechungsindex, auch Brechzahl oder optische Dichte genannt, ist eine optische Materialeigenschaft. Der klassische Brechungsindex ist das Verhältnis der Wellenlänge des Lichts im Vakuum zur Wellenlänge im Material. Der Brechungsindex ist dimensionslos und im Allgemeinen von der Frequenz des Lichts abhängig.

Der komplexe Brechungsindex setzt sich aus einem Realteil, d.h. dem klassischen Brechungsindex, und einem Imaginärteil gemäß Formel (III) zusammen:

$$n = n_r\text{-}ik \qquad\qquad \text{(III)}.$$

Der komplexe Brechungsindex beschreibt das zeitliche und räumliche Fortschreiten der Welle als auch deren Absorption. Der reellwertige Anteil $n_r$, der meist größer als 1 ist, verkürzt die Wellenlänge im Medium. Der Imaginärteil $k$ beschreibt die Dämpfung der Welle.

Der Imaginärteil $k$ wird auch als Absorptionsindex oder Extinktionskoeffizient bezeichnet und stellt den mit der imaginären Einheit i multiplizierten Imaginärteil einer komplexen Zahl dar.

Erfindungsgemäß weist jede Antireflexionsbeschichtung vorzugsweise eine Anordnung von wenigstens zwei optisch transparenten Schichten auf, wobei es bei eingestrahltem Licht zu Reflexions- und Transmissionsphänomenen an den einzelnen optisch transparenten Schichten kommt. Hierbei kann es auch zu konstruktiver und/oder destruktiver Interferenz kommen. Gemäß einer bevorzugten Ausführungsform bestehen die wenigstens eine erste Antireflexionsbeschichtung und die wenigsten eine zweite Antireflexionsbeschichtung des erfindungsgemäßen Brillenglases jeweils ausschließlich aus einer solchen Anordnung von wenigstens zwei optisch transparenten Schichten, bei der es bei eingestrahltem Licht zu Reflexions- und/oder Transmissionsphänomenen an den einzelnen optisch transparenten Schichten kommt. Hierbei kann es auch zu konstruktiver und/oder destruktiver Interferenz kommen. Bei dieser Anordnung von Schichten handelt es sich insbesondere bei der ersten Antireflexionsbeschichtung mit Filterwirkung für blaues Licht vorzugsweise jeweils um einen Stapel optisch transparenter Schichten zur Erzeugung von optischer Interferenz, und vorzugsweise von Reflexion im Blaulichtanteil oder des Blaulichtanteils des sichtbaren Wellenlängenspektrums. Infolge dieser Reflexions- und Transmissionsphänomene an den verschiedenen Schichten der wenigstens einen ersten und optional wenigstens einen zweiten Antireflexionsbeschichtung kommt es zu einer Verringerung der Intensität des transmittierten Lichts im Blaulichtanteil, wodurch eine optische Filterwirkung erzeugt wird. Die Verringerung der Intensität des transmittierten Blaulichtanteils ist vorzugsweise auf eine erhöhte Reflexion des Blaulichtanteils zurückzuführen.

Die Filterwirkung des erfindungsgemäßen Brillenglases, insbesondere die Filterwirkung für blaues Licht, kann durch eine Auswahl der Materialien, aus denen die einzelnen Schichten der wenigstens einen ersten Antireflexionsbeschichtung bestehen, deren Schichtdicke und/oder der Anzahl der Schichten eingestellt werden. Die erfindungsgemäß zu verwendende wenigstens eine erste Antireflexionsbeschichtung kann beispielsweise definierte Werte für die Reflexion, die Transmission und/oder die Absorption für das auf die wenigstens eine erste Antireflexionsbeschichtung auftreffende sichtbare Licht aufweisen. Die Filterwirkung der erfindungsgemäß zu verwendenden wenigstens einen ersten Antireflexionsbeschichtung kann auch unter bestimmten Einfallswinkeln des auftreffenden Lichts vorliegen. Ist der Einfallswinkel von 0° verschieden, kann die Filterwirkung auch die polarisierten Anteile des auftreffenden Lichts betreffen. Unter einem Einfallswinkel von 0° wird der Fall verstanden, dass der Lichtstrahl lotrecht auf die Fläche trifft. Weicht der Einfallswinkel von 0° ab, wird der Einfallswinkel zum Lot auf diese Fläche gemessen. Die für einen Einfallswinkel von 0° berechneten und/oder gemessenen Transmissionskurven und/oder Reflexionskurven bleiben wenigstens bis zu einem optischen Einfallswinkel von 20° annähernd erhalten. Dieser Winkelbereich deckt den Bereich der Hauptdurchblickrichtungen durch ein Brillenglas ab. Für von 0° verschiedene optische Einfallswinkel ist die Reflexion von Licht an einer Oberfläche oder an einem Interferenzschichtsystem abhängig vom Polarisationszustand des Lichtes. Licht kann dabei unpolarisiert, p-polarisiert oder s-polarisiert in Bezug auf die optische Einfallsebene sein. Die optische Einfallsebene wird dabei vom Richtungsvektor, der senkrecht auf der Oberfläche steht und vom Richtungsvektor des einfallenden Lichts aufgespannt. Betrachtet man Einfallswinkel in einem Winkelbereich von 0° bis 20° ist dieser Effekt der unterschiedlichen Reflexion für unterschiedliche Polarisationsrichtungen klein, es kann näherungsweise unpolarisiertes Licht angenommen werden.

Gemäß einer bevorzugten Weiterbildung der Erfindung weist die wenigstens eine erste Antireflexionsbeschichtung mit Filterwirkung für blaues Licht wenigstens 2 niedrigbrechende optisch transparente Schichten mit einem Brechungsindex $n_1 < 1,8$ und wenigstens 2 hochbrechende optisch transparente Schichten mit einem Brechungsindex $n_2 \geq 1,8$ auf.

Vorzugsweise umfasst die wenigstens eine erste Antireflexionsbeschichtung mit Filterwirkung für blaues Licht in der Summe 4 bis 100, vorzugsweise 6 bis 80, vorzugsweise 8 bis 70, weiter vorzugsweise 10 bis 60, weiter vorzugsweise 12 bis 50, weiter vorzugsweise 14 bis 38, weiter vorzugsweise 16 bis 30, niedrigbrechende Schichten und hochbrechende Schichten oder besteht daraus. Die niedrigbrechenden Schichten und hochbrechenden Schichten sind hierbei vorzugsweise alternierend angeordnet. Als sehr geeignet haben sich insgesamt auch 8 bis 16, vorzugsweise 10 bis 14 niedrigbrechende und hochbrechende Schichten erwiesen. Die in diesem Absatz angegebenen Bereichsangaben beziehen sich dabei auf die Summe der niedrigbrechenden und hochbrechenden Schichten.

Gemäß einer weiteren bevorzugten Weiterbildung der Erfindung weisen die niedrigbrechenden optisch transparenten Schichten der wenigstens einen ersten Antireflexionsbeschichtung mit Filterwirkung für blaues Licht einen Brechungsindex $n_1$ aus einem Bereich von 1,3 bis 1,78 auf und sind vorzugsweise aus der Gruppe, die aus Siliziumoxid, Aluminiumoxid, Magnesiumfluorid, und Mischungen davon besteht, ausgewählt.

Gemäß einer weiteren bevorzugten Weiterbildung der Erfindung weisen die hochbrechenden optisch transparenten Schichten der wenigstens einen ersten Antireflexionsbeschichtung mit Filterwirkung für blaues Licht einen Brechungsindex $n_2$ aus einem Bereich von 2,0 bis 2,9 auf und sind vorzugsweise aus der Gruppe, die aus Titanoxid, Eisenoxid, Nioboxid, Tantaloxid, Zirkoniumoxid, Chromoxid, Ceroxid, Kobaltoxid, und Mischungen davon besteht, ausgewählt sind.

Gemäß einer weiteren bevorzugten Weiterbildung der Erfindung sind die niedrigbrechenden und hochbrechenden optisch transparenten Schichten der wenigstens einen ersten Antireflexionsbeschichtung mit Filterwirkung für blaues Licht alternierend übereinander und vorzugsweise aneinander angrenzend angeordnet.

Gemäß einer bevorzugten Ausführungsform liegt die Schichtdicke jeder optisch transparenten Schicht in einem Dickenbereich von 5 nm zu 500 nm, vorzugsweise von 6 nm bis 460 nm, weiter vorzugsweise von 7 nm bis 420 nm, weiter vorzugsweise von 8 nm bis 380 nm, noch weiter bevorzugt von 9 nm bis 320 nm, vorzugsweise 10 nm bis 280 nm, vorzugsweise 11 nm bis 220 nm, vorzugsweise 12 nm bis 180 nm, vorzugsweise 13 nm bis 150 nm, vorzugsweise von 14 nm bis 120 nm, weiter vorzugsweise von 15 nm bis 110 nm, weiter vorzugsweise von 25 nm bis 90 nm, noch weiter bevorzugt von 30 nm bis 80 nm. Die Dicke jeder Schicht stellt dabei die räumliche Erstreckung der Schicht senkrecht zur Fläche dar. Die Dicke jeder Schicht wird bevorzugt bei Abscheidung derselben eingestellt. Vor Abscheidung der ersten Schicht wird die zu beschichtende Oberfläche bevorzugt mit Ionen, beispielsweise Argonionen beaufschlagt.

Die wenigstens eine erste Antireflexionsbeschichtung mit Filterwirkung für blaues Licht kann im Hinblick auf die Schichtenfolge einen symmetrischen oder einen asymmetrischen Schichtenaufbau aufweisen.

Ein asymmetrischer Schichtenaufbau kann sich beispielsweise dadurch ergeben, dass die Schichtdicke der in einem Schichtstapel angeordneten Schichten je nach Anordnung in dem Schichtenstapel voneinander verschieden ist. Auch kann sich ein asymmetrischer Schichtenaufbau dadurch ergeben, dass die in den einzelnen Schichten verwendeten Metalloxide voneinander verschieden sind, so dass sich kein symmetrischer Aufbau ergibt.

Auch kann sich ein asymmetrischer Schichtenaufbau dadurch ergeben, dass die beiden außenliegenden Schichten an der Oberseite bzw. Unterseite der wenigstens einen ersten Antireflexionsbeschichtung mit Filterwirkung für blaues Licht voneinander verschieden sind. Beispielsweise kann bei einer alternierenden Anordnung von hochbrechenden Schichten, beispielsweise $TiO_2$-Schichten, und niedrigbrechenden Schichten, beispielsweise $SiO_2$-Schichten, die untere Fläche der wenigstens einen ersten Antireflexionsbeschichtung mit Filterwirkung für blaues Licht als $SiO_2$-Schicht und die obere Fläche der wenigstens einen ersten Antireflexionsbeschichtung mit Filterwirkung für blaues Licht als $TiO_2$-Schicht ausgebildet sein.

Gemäß einer weiteren bevorzugten Ausführungsform weisen die wenigstens eine erste Antireflexionsbeschichtung und wenigstens eine zweite Antireflexionsbeschichtung, die vorzugsweise jeweils wenigstens zwei optisch transparente Schichten umfassen, jeweils ein oder mehrere Dielektrika, vorzugsweise wenigstens ein Metalloxid, in einer Menge von 95 bis 100 Gew.-%, weiter bevorzugt von 97 bis 99,5 Gew.-%, weiter bevorzugt von 98 bis 99 Gew.-%, jeweils bezogen auf das Gesamtgewicht der jeweiligen Antireflexionsbeschichtung, auf.

Äußerst bevorzugt besteht jede optisch transparente Schicht der Antireflexionsbeschichtung ausschließlich aus einem Metalloxid oder mehreren Metalloxiden. Gemäß einer weiteren bevorzugten Ausführungsform besteht jede optisch transparente Schicht der Antireflexionsbeschichtung aus einem einzigen Metalloxid.

Unter "Metalloxid(en)" werden im Sinne der Erfindung auch Metalloxidhydroxid(e) und Metallhydroxid(e) und auch Mischungen davon verstanden. Äußerst bevorzugt handelt es sich bei dem Metalloxid bzw. den Metalloxiden um reine(s) Metalloxid(e).

Gemäß einer bevorzugten Ausführungsform der Erfindung weist die wenigstens eine erste Antireflexionsbeschichtung und die wenigstens eine zweite Antireflexionsbeschichtung jeweils eine Abfolge von hoch- und niedrigbrechenden optisch transparenten Schichten auf, vorzugsweise aus oder mit Dielektrika, weiter vorzugsweise aus oder mit wenigstens einem Metalloxid.

Gemäß einer weiteren bevorzugten Ausführungsform weist die niedrigbrechende optisch transparente Schicht einen Brechungsindex $n_1$ aus einem Bereich von 1,3 bis 1,78 auf und wird vorzugsweise aus der Gruppe, die aus Siliziumoxid, Aluminiumoxid, Magnesiumfluorid, und Mischungen davon besteht, ausgewählt. Als niedrigbrechendes Metalloxid kann auch Boroxid verwendet werden. Gemäß einer bevorzugten Ausführungsform der Erfindung sind die vorgenannten niedrigbrechenden Metalloxide röntgenamorph. Der Brechungsindex der niedrigbrechenden optisch transparenten Schicht ist eine Funktion der Wellenlänge.

Vorzugsweise handelt es sich bei Siliziumoxid um $SiO_2$. Im Sinne der Erfindung wird Siliziumoxid, insbesondere $SiO_2$, als Metalloxid verstanden. Im sichtbaren Spektralbereich von 380 nm bis 780 nm variiert der Brechungsindex einer $SiO_2$-Schicht in einem Bereich von 1,482 (bei 380 nm) bis 1,462 (bei 780 nm). Dabei nimmt der Wert des Brechungsindex kontinuierlich ab.

Bei Aluminiumoxid handelt es sich vorzugsweise um $Al_2O_3$ oder AlOOH. Bei Boroxid handelt es sich bevorzugt um $B_2O_3$. Bei Magnesiumfluorid handelt es sich vorzugsweise um $MgF_2$.

Äußerst bevorzugt wird die niedrigbrechende optische transparente Schicht aus der Gruppe, die aus Siliziumoxid, Aluminiumoxid, Magnesiumfluorid, und Mischungen davon besteht ausgewählt. Weiterhin sehr bevorzugt ist Siliziumoxid, insbesondere $SiO_2$. Weiterhin sehr bevorzugt ist Aluminiumoxid, insbesondere $Al_2O_3$. Weiterhin sehr bevorzugt ist Magnesiumfluorid, insbesondere $MgF_2$. Vorzugsweise sind die vorgenannten niedrigbrechenden Metalloxide röntgenamorph.

Gemäß einer weiteren bevorzugten Ausführungsform weist die hochbrechende optisch transparente Schicht einen Brechungsindex $n_2$ aus einem Bereich von 2,0 bis 2,9 auf und wird vorzugsweise aus der Gruppe, die aus Titanoxid, Eisenoxid, Nioboxid, Tantaloxid, Zirkoniumoxid, Zinnoxid, Ceroxid, Chromoxid, Kobaltoxid, und Mischungen davon besteht, ausgewählt. Gemäß einer bevorzugten Ausführungsform der Erfindung sind die vorgenannten hochbrechenden Metalloxide röntgenamorph. Der Brechungsindex der hochbrechenden optisch transparenten Schicht ist eine Funktion der Wellenlänge.

Bei Titanoxid handelt es sich vorzugsweise um $TiO_2$. Weiter vorzugsweise liegt das $TiO_2$ als Anatas oder Rutil, noch weiter bevorzugt als Rutil, ganz besonders bevorzugt röntgenamorph vor. Das Eisenoxid liegt vorzugsweise als $Fe_2O_3$ (Hämatit) oder als $Fe_3O_4$ (Magnetit), weiter vorzugsweise als $Fe_2O_3$, vor. Das Nioboxid liegt vorzugsweise als $Nb_2O_5$ vor. Das Tantaloxid liegt vorzugsweise als $Ta_2O_5$ vor. Das Zirkoniumoxid liegt vorzugsweise als $ZrO_2$ vor. Das

Zinnoxid liegt vorzugsweise als $SnO_2$ vor.

Äußerst bevorzugt wird die hochbrechende Schicht aus der Gruppe, die aus Titandioxid, Nioboxid, Tantaloxid, Zirkoniumoxid, und Mischungen davon besteht, ausgewählt. Vorzugsweise sind die vorgenannten hochbrechenden Metalloxide röntgenamorph. Im sichtbaren Spektralbereich von 380 nm bis 780 nm variiert der Brechungsindex einer $TiO_2$-Schicht in einem Bereich von 2,773 (bei 380 nm) bis 2,338 (bei 780 nm). Dabei nimmt der Wert des Brechungsindex kontinuierlich ab.

Gemäß einer weiteren bevorzugten Ausführungsform der Erfindung weist die wenigstens eine erste Antireflexionsbeschichtung mit Filterwirkung für blaues Licht eine alternierende Schichtfolge von wenigstens zwei optischen transparenten Schichten auf, wobei die erste optisch transparente Schicht einen Brechungsindex $n_1$ und die zweite optische transparente Schicht einen Brechungsindex $n_2$ aufweist und wobei sich $n_1$ und $n_2$ vorzugsweise um 0,1 bis 1,4, weiter vorzugsweise um 0,2 bis 1,3, weiter vorzugsweise um 0,3 bis 1,2, weiter vorzugsweise um 0,4 bis 1,1, weiter vorzugsweise um 0,5 bis 1,0, weiter vorzugsweise um 0,6 bis 0,9, unterscheiden.

Gemäß einer weiteren bevorzugten Ausführungsform der Erfindung umfasst die wenigstens eine erste Antireflexionsbeschichtung mit Filterwirkung für blaues Licht als wenigstens eine niedrigbrechende Schicht wenigstens eine Schicht aus Siliziumoxid, vorzugsweise $SiO_2$, und als wenigstens eine hochbrechende Schicht wenigstens eine Schichten aus Titanoxid, vorzugsweise $TiO_2$, weiter vorzugsweise röntgenamorph, wobei die wenigstens eine Siliziumoxidschicht und die wenigstens eine Titanoxidschicht vorzugsweise alternierend angeordnet sind.

Vorzugsweise umfasst die wenigstens eine erste Antireflexionsbeschichtung mit Filterwirkung für blaues Licht in der Summe 4 bis 100, vorzugsweise 6 bis 80, vorzugsweise 8 bis 70, weiter vorzugsweise 10 bis 60, weiter vorzugsweise 12 bis 50, weiter vorzugsweise 14 bis 38, weiter vorzugsweise 16 bis 30, Titanoxidschichten und Siliziumoxidschichten oder besteht daraus, wobei die Titanoxidschichten und Siliziumoxidschichten vorzugsweise alternierend angeordnet sind. Als sehr geeignet haben sich insgesamt auch 8 bis 16, vorzugsweise 10 bis 14, Titanoxidschichten und Siliziumoxidschichten erwiesen. Vorzugsweise sind die Titanoxidschichten und Siliziumoxidschichten röntgenamorph. Gemäß einer weiteren bevorzugten Ausführungsform der Erfindung ist das Titanoxid $TiO_2$ und das Siliziumoxid $SiO_2$.

Äußerst vorzugsweise besteht die wenigstens eine erste Antireflexionsbeschichtung mit Filterwirkung für blaues Licht gemäß der vorliegenden Erfindung im Wesentlichen aus Metalloxid(en), vorzugsweise aus Metalloxid(en). Aufgrund der metalloxidischen Struktur ist die wenigstens eine erste Antireflexionsbeschichtung mit Filterwirkung für blaues Licht gemäß der vorliegenden Erfindung nicht korrosionsanfällig. Die Aufbringung von separaten Korrosionsschutzschichten ist somit vorteilhafterweise nicht erforderlich. Die wenigstens eine erste Antireflexionsbeschichtung mit Filterwirkung für blaues Licht ist mithin auch in einer korrodierenden Umgebung, beispielsweise in Gegenwart von Wasser und Sauerstoff, gegenüber Korrosion stabil.

Des Weiteren weist die wenigstens eine erste Antireflexionsbeschichtung mit Filterwirkung für blaues Licht im Hinblick auf den metalloxidischen Aufbau eine außerordentliche Stabilität gegenüber erhöhten Temperaturen und/oder intensivem Sonnenlicht auf.

Gemäß einer bevorzugten Variante der Erfindung umfasst oder besteht das optische Linsensubstrat, vorzugsweise Brillenglassubstrat, aus mineralischem Glas, beispielsweise Silikatglas.

Gemäß einer weiteren bevorzugten Ausführungsform der Erfindung umfasst oder besteht das optische Linsensubstrat, vorzugsweise Brillenglassubstrat, aus organischem Glas.

Das optische Linsensubstrat, vorzugsweise Brillenglassubstrat, kann verschiedene Geometrien aufweisen, beispielsweise bikonvex, plan-konvex, konkav-konvex, bikonkav, plan-konkav, konvex-konkav sein. Gemäß einer bevorzugten Ausführungsform ist das optische Linsensubstrat, vorzugsweise Brillenglassubstrat, eine Meniskuslinse.

Das organische Glas kann aus einem Polymermaterial bestehen oder dieses umfassen, das aus der Gruppe, die aus Polythiourethan, Polyepisulfid, Polymethylmethacrylat, Polycarbonat, Polyallyldiglycolcarbonat, Polyacrylat, Polyurethan, Polyharnstoff, Polyamid, Polysulfon, Polyallyl, Fumarsäurepolymer, Polystyrol, Polymethylacrylat, Biopolymeren, und Mischungen davon besteht, ausgewählt werden. Vorzugsweise umfasst das Kunststoffmaterial ein Polymermaterial oder besteht daraus, dass aus der Gruppe, die aus Polythiourethan, Polyepisulfid, Polymethylmethacrylat, Polycarbonat, Polyallyldiglycolcarbonat, Polyacrylat, Polyurethan, Polyharnstoff, Polyamid, Polysulfon, Polyallyl, Fumarsäurepolymer, Polystyrol, Polymethylacrylat, Biopolymeren, und Mischungen davon besteht, ausgewählt wird.

Äußerst bevorzugt umfasst das organische Glas ein Polymermaterial oder besteht daraus, das aus der Gruppe, die aus Polyurethan, Polyharnstoff, Polythiourethan, Polyepisulfid, Polycarbonat, Polyallyldiglycolcarbonat, und Mischungen davon besteht, ausgewählt wird.

Geeignete Polymermaterialien sind beispielsweise unter den Handelsnamen MR6, MR7, MR8, MR10, MR20, MR174, CR39, CR330, CR607, CR630, RAV700, RAV7NG, RAV7AT, RAV710, RAV713, RAV720, TRIVEX, PANLITE, MGC 1.76, RAVolution erhältlich.

Das Basismaterial von CR39, CR330, CR607, CR630, RAV700, RAV7NG, RAV7AT, RAV710, RAV713 und RAV720 ist Polyallyldiglycolcarbonat. Das Basismaterial von RAVolution und TRIVEX ist Polyharnstoff/Polyurethan. Das Basismaterial von MR6, MR7, MR8 und MR10 ist Polythiourethan. Das Basismaterial von MR174 und MGC1.76 ist Polyepisulfid.

Der Brechungsindex der Substrate ist ebenfalls eine Funktion der Wellenlänge. Im sichtbaren Spektralbereich von 380 nm bis 780 nm variiert der Brechungsindex beispielsweise eines Substrats basierend auf Polythiourethan in einem Bereich von 1,656 (bei 380 nm) bis 1,583 (bei 780 nm). Dabei nimmt der Wert des Brechungsindex kontinuierlich ab.

Gemäß einer bevorzugten Ausführungsform der Erfindung ist das organische Glas mit einem Lack, wie zum Beispiel einem Polysiloxan-basiertem Hartlack beschichtet. Dieser Lack bewirkt einen Schutz vor mechanischen Beschädigungen, beispielsweise von Kratzern. Gemäß einer weiteren bevorzugten Ausführungsform der Erfindung wird zwischen dem organischen Glas und der Hartlackschicht eine Primerschicht angeordnet, die die Haftung der Hartlackschicht auf dem organischen Glas verbessert.

Hartlacke werden typischerweise mit Tauchbeschichtungsverfahren oder Schleuderbeschichtungsverfahren flüssig, vorzugsweise auf beide Oberflächen des organischen Glases, aufgebracht und dann beispielsweise thermisch ausgehärtet. In Abhängigkeit von der Zusammensetzung des Hartlacks kann die Härtung auch mit UV-Licht erfolgen. Das UV-Licht induziert dabei chemische Reaktionen, die zur Aushärtung des flüssigen Lacks führen.

Diese Hartlacke sind vorzugsweise härter als das organische Glas. Vorzugsweise weisen diese Lacke eine Indentationshärte größer als 150 MPa, bevorzugt größer als 250 MPa, gemessen mit Hilfe der Nanoindentierung, die auch als instrumentierte Eindringprüfung bezeichnet wird. Die Indentationshärte wird dabei bestimmt, wie in Oliver, W.C. und Pharr, G.M., "Measurement of hardness and elastic modulus by instrumented indentation: Advances in understanding and refinements to methodology", J. Mater. Res., Bd. 19, Nr. 1, Jan 2004, Seiten 3 bis 20, angegeben.

Die Schichtdicke der ausgehärteten Hartlackschicht liegt beispielsweise in einem Bereich von 2 $\mu$m bis 5 $\mu$m, bevorzugt beispielsweise in einem Bereich von 2,1 $\mu$m bis 4,3 $\mu$m.

Bei einer weiteren Ausführungsform der Erfindung ist zunächst vorzugsweise direkt auf dem organischen Glas eine flüssige Primerschicht, beispielsweise mittels Tauchbeschichtungsverfahren oder Schleuderbeschichtungsverfahren, aufgebracht. Nach thermischer Trocknung dieser Primerschicht weist diese beispielsweise eine Schichtdicke > 400 nm, beispielsweise von 500 nm bis 1 $\mu$m, auf. Auf diese Primerschicht ist sodann vorzugsweise eine Hartlackschicht aufgebracht, wie vorstehend beschrieben. Die Primerschicht dient einer Verbesserung der Haftung der Hartlackschicht auf dem organischen Glas.

Die Zusammensetzung der Primerschicht wird vorzugsweise aus der Gruppe, die aus Polyurethandispersion, Polyurethan-Polyharnstoff-Dispersion und Mischungen davon besteht, ausgewählt. Ergänzend wird in dieser Hinsicht auf die US 5,316,791, insbesondere auf Spalte 3, Zeile 41 bis Spalte 6, Zeile 11 Bezug genommen, deren Inhalt hiermit unter Bezugnahme aufgenommen ist. Ein kommerziell erhältlicher Primer ist beispielsweise der Primer PR-1165 der Firma SDC TECHNOLOGIES, INC. 45 Parker, Suite 100 Irvine, CA 92618 USA.

Der Brechungsindex der Primerschicht ist ebenfalls eine Funktion der Wellenlänge. Im sichtbaren Spektralbereich von 380 nm bis 780 nm kann der Brechungsindex einer Primerschicht in einem Bereich von 1,537 (bei 380 nm) bis 1,503 (bei 780 nm) variieren. Dabei nimmt der Wert des Brechungsindex kontinuierlich ab.

Der Hartlack ist vorzugsweise ein Polysiloxan, das beispielsweise durch Umsetzung wenigstens eines Organosilans und wenigstens eines Tetraalkoxysilans in Gegenwart von kolloidalem anorganischen Oxid, Fluorid oder Oxyfluorid erhältlich ist. Ergänzend wird in dieser Hinsicht auf die DE 10 2011 083 960 A1 Bezug genommen, deren Inhalt hiermit unter Bezugnahme aufgenommen ist. Ein kommerziell erhältlicher Polysiloxan-Hartlack ist beispielsweise der MP-1154D der Firma SDC TECHNOLOGIES, INC. 45 Parker, Suite 100 Irvine, CA 92618 USA.

Der Brechungsindex der Hartlackschicht ist ebenfalls eine Funktion der Wellenlänge. Im sichtbaren Spektralbereich von 380 nm bis 780 nm kann der Brechungsindex einer Hartlackschicht in einem Bereich von 1,632 (bei 380 nm) bis 1,60 (bei 780 nm) oder in einem Bereich von 1,505 (bei 380 nm) bis 1,480 (bei 780 nm) variieren. Dabei nimmt der Wert des Brechungsindex jeweils kontinuierlich ab.

Erfindungsgemäß weist die ausgehärtete Hartlackschicht bevorzugt eine Rauigkeit < 8 nm rms, weiter vorzugsweise < 7 nm rms, weiter vorzugsweise < 6 nm rms, weiter vorzugsweise < 5 nm rms, noch weiter vorzugsweise < 4 nm rms, noch weiter vorzugsweise < 3 nm rms, noch weiter vorzugsweise < 2 nm rms, noch weiter vorzugsweise < 1 nm rms, auf.

Unter "rms" wird die quadratische Rauigkeit (rms englisch: root-mean-squared roughness) verstanden, die auch als $R_q$ bezeichnet wird. Die quadratische Rauigkeit "rms" oder "$R_q$" stellt die Standardabweichung der Verteilung der Oberflächenhöhen dar, wie in E.S. Gadelmawla et al., "Roughness parameters", Journal of Materials Processing Technology 123 (2002) 133-145, Ziffer 2.2 erläutert, dessen Offenbarung hiermit unter Bezugnahme aufgenommen ist. Mathematisch ist die quadratische Rauigkeit $R_q$, wie in Formel (VI) spezifiziert, definiert:

$$R_q = \sqrt{\frac{1}{l}\int_0^l \{y(x)\}^2\, dx} \qquad\qquad \text{(VI)},$$

wobei:

"*l*" für die Messlänge,

"*y*" für die Oberflächenhöhe steht, und

wobei die Länge "*x*" von 0 bis "*l*" geht.

Die Rauigkeit der Hartlackschicht kann durch die Wahl des Lösemittels, beispielsweise 1-Methoxy-2-propanol, Ethanol und/oder Methanol oder Mischungen davon und/oder durch Verwendung von wenigstens einem Verlaufsadditiv, beispielsweise Silikontensid(e) oder Fluortensid(e), eingestellt werden.

Im Hinblick auf diese bevorzugt geringe Oberflächenrauigkeit sind die nachfolgend aufgebrachten optisch transparenten Schichten vorzugsweise als glatte Schichten, die vorzugsweise entsprechend geringe Rauigkeiten aufweisen, ausgebildet. Die glatten Schichten führen zu definierten optischen Eigenschaften, beispielsweise definierten Filtereigenschaften.

Auf der Hartlackschicht kann optional eine Haftschicht angeordnet sein, die die Haftung zu der nachfolgend aufgebrachten wenigstens einen ersten Antireflexionsbeschichtung mit Filterwirkung für blaues Licht bzw. der wenigstens einen zweiten Antireflexionsbeschichtung, die vorzugsweise keine Filterwirkung für blaues Licht aufweist, verbessert. Die Haftschicht kann beispielsweise eine anorganische Haftschicht, beispielsweise eine Cr/SiO$_2$-Schicht oder eine ZrO$_2$-Schicht, sein. Die Dicke dieser Haftschicht wird vorzugsweise so gewählt, dass sie keine oder nur eine geringe Auswirkung auf das optische Verhalten des Interferenzschichtsystems hat. Die Dicke dieser Haftschicht liegt bevorzugt bei ≤ 6 nm, besonders bevorzugt bei ≤ 4 nm und ganz besonders bevorzugt bei ≤ 2 nm.

Auf die Hartlackschicht, bzw. die optionale Haftschicht, ist sodann vorzugsweise die wenigstens eine erste Antireflexionsbeschichtung mit Filterwirkung für blaues Licht vorzugsweise auf der Vorderfläche des Brillenglases und die wenigstens eine zweite Antireflexionsbeschichtung, die gemäß einer bevorzugten Variante keine Filterwirkung für blaues Licht aufweist, vorzugsweise auf der Rückfläche des Brillenglases aufgebracht. Vorzugsweise handelt es sich bei der wenigsten einen ersten und wenigstens einen zweiten Antireflexionsbeschichtung um Metalloxid-haltige Schichten, wie vorstehend ausgeführt.

Das Aufbringen der wenigstens einen ersten und wenigstens einen zweiten Antireflexionsbeschichtung erfolgt vorzugsweise mittels Bedampfen, vorzugsweise mit einer üblichen Bedampfungsanlage, vorzugsweise einer PVD-Anlage (PVD: Physical Vapour Deposition; deutsch: physikalische Dampfabscheidung). Die weiteren Verfahrensbedingungen, wie beispielsweise Vakuumaufdampfgeschwindigkeit, Inertgas, Reaktivgas, etc., werden gemäß Herstellerangaben und der gewünschten Filterwirkung für blaues Licht eingestellt. Gemäß einer weiteren erfindungsgemäßen Ausführungsform der Erfindung können die wenigstens eine erste und wenigstens eine zweite Antireflexionsbeschichtung auch mittels Sputtern oder chemischer Dampfabscheidung (CVD: Chemical Vapour Deposition) aufgebracht werden.

Das erfindungsgemäße Brillenglas gemäß einem der Ansprüche 1 bis 14 kann mit einem erfindungsgemäßen Verfahren hergestellt werden, wobei das Verfahren folgende Schritte umfasst:

(a) Bereitstellen eines optischen Linsensubstrates mit einer Vorderfläche und einer Rückfläche,

(b) optional Aufbringen einer Primerschicht auf der Vorderfläche und/oder der Rückfläche,

(c) optional Aufbringen einer Hartlackschicht auf der Primerschicht oder direkt auf der Vorderfläche und/oder Rückfläche des optischen Linsensubstrats,

(d) Aufbringen wenigstens einer ersten Antireflexionsbeschichtung mit Filterwirkung für blaues Licht, vorzugsweise auf der Vorderfläche,

(e) Aufbringen wenigstens einer zweiten Antireflexionsbeschichtung, vorzugsweise auf der Rückfläche,

(f) optional Aufbringen von wenigstes einer weiteren Schicht.

Die Schritte (b) und (c) erfolgen vorzugsweise durch Tauch- oder Schleuderbeschichtung und nachfolgendem Trocknen und/oder Härten. Die Schritte (d) und (e) erfolgen vorzugsweise durch Bedampfen, weiter vorzugsweise durch physikalische Dampfabscheidung (PVD). Vor dem Schritt (d) bzw. (e) kann optional jeweils eine Haftschicht für die jeweils aufgebrachte wenigstens eine Antireflexionsbeschichtung aufgebracht werden.

Gemäß einer bevorzugten Ausführungsform der Erfindung verringert die wenigstens eine erste Antireflexionsbeschichtung mit Filterwirkung für blaues Licht die Transmission für blaues Licht bei 464 nm oder bei 450 nm durch das Brillenglas jeweils um wenigstens 5 % bis maximal 40%, vorzugsweise um wenigstens 8 % bis maximal 35 %, noch weiter bevorzugt um wenigstens 10 % bis maximal 30 %, noch weiter bevorzugt um wenigstens 12 % bis maximal 28 %. Gemäß einer weiteren bevorzugten Ausführungsform verringert die wenigstens eine erste Antireflexionsbeschichtung mit Filterwirkung für blaues Licht die Transmission für blaues Licht bei 464 nm oder bei 450 nm durch das Brillenglas jeweils um wenigstens 10 % bis maximal 20 %, weiter vorzugsweise um wenigstens 12 % bis maximal 19 %. Die Prozentangabe bezieht sich dabei auf die Transmission für blaues Licht bei 464 nm oder bei 450 nm jeweils bei einer ersten Antireflexionsbeschichtung mit Filterwirkung für das blaue Licht, wobei die Filterwirkung gemäß Formel (II) berechnet wird. Gemäß einer weiteren Ausführungsform der Erfindung verringert die wenigstens eine erste Antireflexionsbeschichtung mit Filterwirkung für blaues Licht die Transmission bei 464 nm und bei 450 nm durch das Brillenglas in einem der vorstehend genannten Bereiche. Die Transmission des blauen Lichts, berechnet nach Formel (I), der wenigstens einen ersten Antireflexionsbeschichtung mit Filterwirkung für blaues Licht bei 464 nm oder bei 450 nm liegt dementsprechend vorzugsweise in einem Bereich von 60 % bis 95 %, weiter vorzugsweise von 65 % bis 92 %, weiter vorzugsweise von 70 % bis 90 %, noch weiter vorzugsweise von 72 % bis 88 %. Gemäß einer weiteren bevorzugten Ausführungsform liegt die Transmission der wenigstens einen ersten Antireflexionsbeschichtung mit Filterwirkung für blaues Licht bei 464 nm oder bei 450 nm durch das Brillenglas jeweils in einem Bereich von 80 % bis 90%, weiter vorzugsweise von 81% bis 88 %. Gemäß einer weiteren Ausführungsform liegt die Transmission der wenigstens einen ersten Antireflexionsbeschichtung mit Filterwirkung für blaues Licht bei 464 nm und bei 450 nm ein einem der vorstehend genannten Bereiche.

Die wenigstens eine zweite Antireflexionsbeschichtung weist gemäß einer bevorzugten Ausführungsform der Erfindung keine Filterwirkung für blaues Licht auf. Vorzugsweise transmittiert die wenigstens eine zweite Antireflexionsbeschichtung den vollständigen Wellenlängenbereich des sichtbaren Lichts.

Gemäß einer weiteren Ausführungsform der Erfindung weist die wenigstens eine zweite Antireflexionsbeschichtung auch eine Filterwirkung für blaues Licht auf. Vorzugsweise transmittiert die wenigstens eine zweite Antireflexionsbeschichtung, abgesehen von dem gefilterten Blaulichtanteil, den Wellenlängenbereich des sichtbaren Lichts.

Die Erfinder haben herausgefunden, dass überraschenderweise bei einer Beschränkung der Filterwirkung für das blaue Licht unerwartete Vorteile erhalten werden.

Bei der bevorzugten Beschränkung der Filterwirkung für blaues Licht kommt es zu keiner wesentlichen, vorzugsweise zu keiner, Veränderung des von einem Brillenträger wahrgenommenen Farbspektrums, insbesondere unter Tageslichtbedingungen, beispielsweise mit einer Beleuchtungsstärke von 19000 Lux bis 100000 Lux. Wie oben ausgeführt, liegt die Hemmung der Melatoninsynthese unter Tageslichtbedingungen weit im Sättigungsbereich, d.h. im Plateaubereich der sigmoiden Kurve, so dass eine Verringerung des Blaulichtanteils vorzugsweise um maximal 40 %, weiter vorzugsweise um maximal 35 %, weiter vorzugsweise um maximal 30 %, weiter vorzugsweise um maximal 25 %, weiter vorzugsweise um maximal 20 %, weiter vorzugsweise um maximal 19 %, weiter vorzugsweise in den oben angegebenen engen Blaulicht-Wellenlängenbereichen von 430 nm bis 530 nm, vorzugsweise von 440 nm bis 500 nm, vorzugsweise von 450 nm bis 490 nm, weiter bevorzugt von 453 nm bis 480 nm, weiter bevorzugt von 457 nm bis 475 nm, oder vorzugsweise in einem Wellenlängenbereich von 400 nm bis 500 nm, vorzugsweise von 410 nm bis 490 nm, vorzugsweise von 420 nm bis 480 nm, weiter bevorzugt von >430 nm bis 470 nm und weiter bevorzugt von 440 nm bis 465 nm, keine Müdigkeit bei dem Brillenträger hervorruft. Aufgrund der Beschränkung der Filterwirkung für blaues Licht, kommt es vorteilhafterweise zu keiner merklichen Veränderung des von dem Brillenträger wahrgenommenen Lichtspektrums, vorzugsweise zu keinem Gelbstich bei der Wahrnehmung. Mithin nimmt ein Brillenträger keine wesentliche, vorzugsweise keine, Farbverschiebung wahr, beispielsweise keine signifikante Verschiebung in einen gelben oder orangenen Farbbereich.

Unter Kunstlichtbedingungen, bei denen die Beleuchtungsstärke in einem Bereich von beispielsweise 100 Lux bis 1000 Lux, vorzugsweise von 200 Lux bis 500 Lux, liegt, bewirkt eine Verringerung des Blaulichtanteils in einem Bereich von 5% bis maximal 40%, dass der menschliche Körper bereits Melatonin in erheblichem Umfang synthetisiert bzw. sekretiert, auch wenn der Träger der einer Brille, umfassend wenigstens ein erfindungsgemäßes Brillenglas, bzw. des erfindungsgemäßen Brillenglases einer Lichtquelle mit Blaulichtanteil im Bereich von 464 nm oder 450 nm ausgesetzt ist.

Mithin kann der Träger einer Brille, umfassend wenigstens ein erfindungsgemäßes Brillenglas, auch bei Verwendung eines Computerbildschirmes, Smartphones oder eines Tablet-Computers oder bei Beleuchtung mit LED-Licht eine ausreichende Müdigkeit entwickeln, um zu einem gesunden Schlaf zu gelangen. Des Weiteren kommt es bei einem Träger eines erfindungsgemäßen Brillenglases oder einer Brille, umfassend wenigstens ein erfindungsgemäßes Brillenglas, beim Farbeindruck zu keiner wesentlichen, vorzugsweise zu keiner, wahrnehmbaren Farbverschiebung, da etwa 60% bis 95%, vorzugsweise 65% bis 90%, weiter vorzugsweise 70% bis 85%, weiter bevorzugt 75% bis 80%, weiter bevorzugt 81% bis 88%, des Blaulichtanteils aus dem Umgebungslicht nicht herausgefiltert werden.

Im Hinblick auf den nahezu linearen Zusammenhang zwischen der Hemmung der Melatoninsynthese und der Beleuchtungsstärke in einem Bereich von etwa 30 Lux bis 1000 Lux, vorzugsweise von etwa 100 Lux bis etwa 500 Lux, bewirkt eine scheinbar nur geringe Verringerung des Blaulichtanteils im Lichtspektrum überraschenderweise bereits eine signifikante Verringerung der Hemmung der Melatoninsynthese.

Gemäß einer weiteren bevorzugten Ausführungsform der Erfindung ist die wenigstens eine erste Antireflexionsbeschichtung mit Filterwirkung für blaues Licht auf der Vorderfläche des Brillenglases und die wenigstens eine zweite Antireflexionsbeschichtung auf der Rückfläche des Brillenglases angeordnet.

Gemäß einer weiteren bevorzugten Ausführungsform ist die wenigstens eine erste Antireflexionsbeschichtung mit Filterwirkung für blaues Licht auf der Rückfläche des Brillenglases und die wenigstens eine zweite Antireflexionsbeschichtung auf der Vorderfläche des Brillenglases angeordnet.

Erfindungsgemäß ist es bevorzugt, dass das Brillenglas bzw. die wenigstens ein erfindungsgemäßes Brillenglas umfassende Brille nur eine einzige Antireflexionsbeschichtung mit Filterwirkung für blaues Licht aufweist, wobei diese sodann bevorzugt auf der Vorderfläche des Brillenglases angeordnet ist.

Das erfindungsgemäße Brillenglas kann weiterhin auch wenigstens eine erste Antireflexionsbeschichtung mit einer Filterwirkung für blaues Licht auf der Vorderfläche und eine erste Antireflexionsbeschichtung mit einer Filterwirkung für blaues Licht auf der Rückfläche eines Brillenglases aufweisen.

Dessen ungeachtet kann das erfindungsgemäße Brillenglas selbstverständlich auch mehr als eine Antireflexionsbeschichtung mit Filterwirkung für blaues Licht, beispielsweise zwei Antireflexionsbeschichtungen mit Filterwirkung für blaues Licht aufweisen. So ist es beispielsweise möglich, dass sowohl die wenigstens eine erste Antireflexionsbeschichtung als auch die wenigstens eine zweite Antireflexionsbeschichtung jeweils eine Filterwirkung für blaues Licht aufweist. Produktionstechnisch kann es von Vorteil sein, zwei Antireflexionsbeschichtungen mit Filterwirkung für blaues Licht, d.h. jeweils eine auf der Vorderfläche als auch eine auf der Rückfläche des Brillenglases anzuordnen.

Bei der wenigstens einen zweiten Antireflexionsbeschichtung handelt es sich, sofern diese keine Filterwirkung für blaues Licht aufweist, um eine herkömmliche Antireflexionsbeschichtung. Beispielsweise kann als wenigstens zweite Antireflexionsbeschichtung ebenfalls eine Anordnung von flächig übereinander und vorzugsweise aneinandergrenzenden optisch transparenten Schichten aus hoch- und niedrigbrechenden dielektrischen Schichten, vorzugsweise Schichten aus oder mit Metalloxid(en), aufgebracht werden. Die Herstellung der wenigsten einen zweiten Antireflexionsbeschichtung erfolgt in analoger Weise wie die Herstellung der wenigsten einen ersten Antireflexionsbeschichtung.

Der Unterschied zwischen der wenigstens einen ersten Antireflexionsbeschichtung und der wenigstens einen zweiten Antireflexionsbeschichtung liegt vorzugsweise nur darin, dass die wenigstens eine erste Antireflexionsbeschichtung eine Filterwirkung für blaues Licht aufweist, wie vorstehend erläutert. Mithin weist die zweite Antireflexionsbeschichtung vorzugsweise eine Transmission über den gesamten sichtbaren Wellenlängenbereich in einem Bereich von 25 % bis 100%, weiter vorzugsweise von 30 % bis 98%, weiter vorzugsweise von 40 % bis 95 %, weiter vorzugsweise von 45 % bis 90 %, weiter vorzugsweise von 50 % bis 85 %, weiter vorzugsweise von 55 % bis 80%, weiter vorzugsweise von 60 % bis 75 %, auf. Weiterhin ist bevorzugt, dass eine Transmission der zweiten Antireflexionsbeschichtung über den gesamten sichtbaren Wellenlängenbereich in einem Bereich von 90 % bis 100%, weiter vorzugsweise von 92 % bis 99%, weiter vorzugsweise von 94 % bis 98 %, weiter vorzugsweise von 95 % bis 97 %liegt.

Gemäß einer bevorzugten Ausführungsform weist die wenigstens eine zweite Antireflexionsbeschichtung keine Filterwirkung für einen Wellenlängenbereich des sichtbaren Lichts, insbesondere keine Filterwirkung für blaues Licht, auf. Vorzugsweise dient die wenigstens eine zweite Antireflexionsbeschichtung im Wesentlichen der Vermeidung von Lichtreflexen, mithin einer Verbesserung der Transmission. Gemäß einer weiteren bevorzugten Ausführungsform weist das erfindungsgemäße Brillenglas nur eine einzige zweite Antireflexionsbeschichtung auf.

Die Berechnung der Anordnung und Schichtdicken der einzelnen hochbrechenden und niedrigbrechenden Schichten, vorzugsweise $TiO_2$-Schichten und $SiO_2$-Schichten, sowohl für die wenigstens eine erste Antireflexionsbeschichtung mit Filterwirkung für blaues Licht als auch der wenigstens einen zweiten Antireflexionsbeschichtung, die vorzugsweise keine Filterwirkung für blaues Licht aufweist, kann computerbasiert erfolgen. Beispielsweise kann zur Berechnung einer erfindungsgemäß zu verwendenden Antireflexionsbeschichtung das Softwareprogramm OptiLayer, Version 12.37 der OptiLayer GmbH, 85748 Garching b. München, oder das Softwareprogramm Essential MacLeod Version 11.00.541 der Fa. Thin Film Center Inc., 2745 E Via Rotunda, Tucson, AZ, USA, verwendet werden.

Gemäß einer weiteren Ausführungsform der Erfindung kann das erfindungsgemäße Brillenglas weitere Beschichtungen aufweisen. Beispielsweise kann das Brillenglas ein oder mehrere zusätzliche Schichten, die beispielsweise aus der Gruppe die aus Farbschichten, schmutzabweisenden Beschichtungen (Top Coat), antistatischen Beschichtungen, photochromen Beschichtungen, Antibeschlagbeschichtungen, und Kombinationen davon besteht, aufweisen.

Der Brechungsindex des Top Coat wird als keine Funktion der Wellenlänge angenommen. Der Brechungsindex des Top Coat wird bevorzugt konstant in einem Wellenlängenbereich von 380 nm bis 780 nm mit n = 1,380 angenommen.

Gemäß einer bevorzugten Ausführungsform der Erfindung verringert die wenigstens eine erste Antireflexionsbeschichtung mit Filterwirkung für blaues Licht die Transmission für blaues Licht bei 464 nm oder bei 450 nm durch das Brillenglas jeweils in einem Bereich wenigstens von 5 % bis maximal 40 % und weist einen maximalen Gelbwert G von jeweils nicht mehr als 12 sowie einen Lichtreflexionsgrad von jeweils < 3,5 %, vorzugsweise von < 2,5 %, auf.

Gemäß einer bevorzugten Ausführungsform weist die erste Antireflexionsbeschichtung mit einer Filterwirkung für blaues Licht eine Diffusivität auf, die das Aufnehmen von durch die erste Antireflexionsbeschichtung hindurchtretenden Wassermolekülen in das Linsensubstrat und das Freigeben von Wassermolekülen aus dem Linsensubstrat durch die erste Antireflexionsbeschichtung hindurch aus einer auf der dem Linsensubstrat abgewandten Seite der Antireflexionsbeschichtung angeordneten Luftatmosphäre mit einer Feuchtigkeitsstromdichte gewährleistet, die ausgehend von dem Gleichgewichtszustand der Menge der in dem Linsensubstrat in einer Luftatmosphäre bei 23°C und 50% relativer Luftfeuchte eingelagerten Wassermoleküle das Einstellen des Gleichgewichtszustands der Menge der in dem Linsensubstrat in einer Luftatmosphäre bei 40°C und 95% relativer Luftfeuchte eingelagerten Wassermoleküle innerhalb eines Zeitintervalls bewirkt, das um nicht mehr als eine Zeitspanne der Länge $\Delta t = 10h$, bevorzugt um nicht mehr als eine Zeitspanne der Länge $\Delta t = 9h$ oder $\Delta t = 8h$ oder $\Delta t = 7h$ oder $\Delta t = 6h$ oder $\Delta t = 5h$ oder $\Delta t = 4h$ oder $\Delta t = 3h$ oder $\Delta t = 2h$, besonders bevorzugt um nicht mehr als eine Zeitspanne der Länge $\Delta t = 1h$, länger ist als das für das Einstellen dieses Gleichgewichtszustands unter entsprechenden Bedingungen bei einem zu dem Linsensubstrat identischen unbeschichteten Linsensubstrat erforderliche Zeitintervall. Die Diffusivität der ersten Antireflexionsbeschichtung mit Filterwirkung bewirkt, dass Beschädigungen, wie z.B. eine Kratzstelle, dieser Beschichtung wie sie im Alltagsgebrauch eines Brillenglases entstehen können, in Gegenwart von Feuchtigkeit nicht zu lokalen Volumenänderungen des Linsensubstrats und somit zu Oberflächenverformungen des beschichteten Brillenglases führen.

Das Brillenglas kann als Brillenglas-Halbfertigprodukt, d.h. als Linsenrohling mit nur einer optisch fertig bearbeiteten Fläche gemäß DIN EN ISO 13666:2013-10, Absatz 8.4.2, oder als fertiges Brillenglas, d.h. als Brillenglas mit zwei fertig bearbeiteten optischen Flächen vor oder nach der Randbearbeitung gemäß DIN EN ISO 13666:2013-10, Absatz 8.4.6, vorliegen. Die Brillenglas-Halbfertigprodukte können als Einstärken-Brillenglas-Halbfertigprodukte, Mehrstärken-Brillenglas-Halbfertigprodukte oder Gleitsicht-Brillenglas-Halbfertigprodukte gemäß DIN EN ISO 13666:2013-10, Absätze 8.4.3, 8.4.4 und 8.4.5, vorliegen. Bei den fertigen Brillengläsern kann es sich um Einstärken-Brillengläser, Mehrstärken-Brillengläser, Zweistärken-Brillengläser, Dreistärken-Brillengläser, Gleitsicht-Brillengläser oder degressive Brillengläser gemäß DIN EN ISO 13666:2013-10, Absätze 8.3.1, 8.3.2, 8.3.3, 8.3.4, 8.3.5 und 8.3.6 handeln.

In Hinblick auf die Brillengestelle kann es sich um eine Vollrandbrille, Halbrandbrille, randlose Brille, einen Zwicker, eine Klappbrille oder auch eine Schminkbrille handeln. Die Brille kann dabei als Lesebrille, Bildschirmbrille, Sonnenbrille, Sportbrille, Arbeitsschutzbrille oder Überbrille verwendet werden.

Die Erfindung wird nachfolgend anhand von Figuren und Beispielen näher erläutert, wobei die Erfindung jedoch nicht auf diese konkreten Beispiele beschränkt ist.

**Figuren**

Fig. 1 zeigt den spektralen Verlauf der relativen Wirksamkeit der Unterdrückung der Bildung von Melatonin in Abhängigkeit von der Wellenlänge.

Fig. 2 zeigt den spektralen Verlauf der Emission einer weißen LED für Beleuchtungszwecke.

Fig. 3 zeigt den spektralen Verlauf der Emission zweier Smartphone-Bildschirme.

Fig. 4 zeigt die Melatoninunterdrückung in Abhängigkeit von der Beleuchtungsstärke.

Fig. 5 zeigt die Transmissions(Ta)kurve und Reflexions(Ra)kurve eines erfindungsgemäßen Brillenglases.

Fig. 6 zeigt die Reflexionskurven einer Antireflexbeschichtung mit Filterwirkung für blaues Licht und eine Antireflexionsbeschichtung ohne Filterwirkung für blaues Licht.

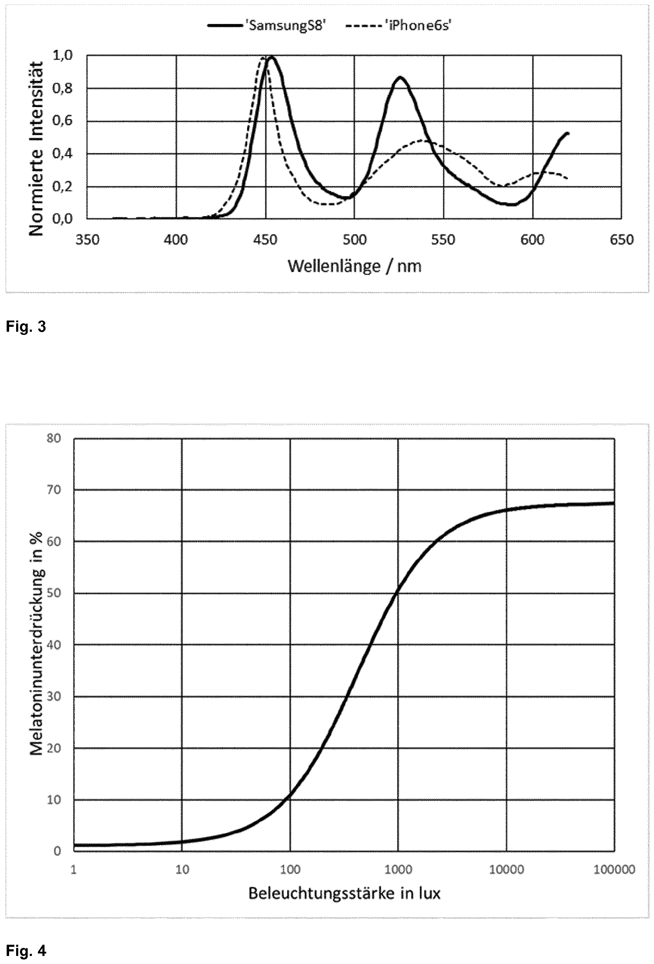

Die in den Fig. 4 bis 6 gezeigten Transmissions- und Reflexionskurven beziehen sich auf einen optischen Einfallswinkel von 0°. Bis zu einem optischen Einfallswinkel von wenigstens 20° gelten die berechneten und/oder gemessenen Werte der Transmissionskurven und/oder Reflexionskurven, ohne dass sich die Eigenschaften des erfindungsgemäßen Brillenglases wesentlich ändern. Dieser Winkelbereich deckt den Bereich der Hauptdurchblickrichtungen durch ein Brillenglas ab.

In Fig. 1 ist die im Stand der Technik bekannte Hemmung des Melatoninsynthese in Abhängigkeit von der spektralen Verteilung des Blaulichtanteil beim Menschen aufgetragen. Bei 464 nm liegt das Maximum der Hemmung der Melatoninsynthese.

In Fig. 2 ist der spektrale Verlauf der Emission des sichtbaren Lichts einer weißen LED für Beleuchtungszwecke dargestellt. In einem Bereich um 464 nm liegt das normalisierte Intensitätsmaximum des Blaulichtanteils.

In Fig. 3 ist der spektrale Verlauf des von dem Bildschirm eines Samsung® Galaxy S8® und eines iPhone® 6s (Hersteller: Firma Apple Inc.) emittierten Lichts dargestellt. Auch hier liegt das Intensitätsmaximum in einem Bereich um 464 nm.

In Fig. 4 ist die prozentuale Hemmung der Melatoninsynthese (kurz: Melatoninunterdrückung) in Abhängigkeit von der Beleuchtungsstärke auf Augenhöhe dargestellt. Bei dieser Kurve handelt es um eine sigmoide Kurve, wobei zwischen 100 Lux und 1000 Lux ein nahezu linearer Zusammenhang mit der prozentualen Hemmung der Melatoninsynthese gegeben ist. Ab einer Beleuchtungsstärke von etwa 1000 Lux geht die Hemmung in eine Sättigung, d.h. in einen Plateaubereich über. Mithin kann die Hemmung der Melatoninsynthese zwischen 100 Lux und 1000 Lux, insbesondere zwischen 100 Lux und 500 Lux, durch Filtern des Blaulichtanteils in einem Bereich um 464 nm, stark beeinflusst werden.

Fig. 5 zeigt die Transmissionskurve und Reflexionskurve eines erfindungsgemäßen Brillenglases, das gemäß dem erfindungsgemäßen Beispiel hergestellt wurde. Das Brillenglas ist beidseitig mit einer Primerschicht und einer Hartlackschicht versehen. Auf der Vorderfläche des Brillenglases ist die Antireflexionsbeschichtung gemäß Beispiel 1, die eine Filterwirkung für blaues Licht aufweist, und auf der Rückfläche ist die Antireflexionsbeschichtung gemäß Beispiel 6, die keine Filterwirkung für blaues Licht aufweist, aufgebracht. Das erfindungsgemäße Brillenglas weist über einen Wellenlängenbereich von etwa 400 nm bis 800 nm eine nahezu konstante Transmission auf.

Im Bereich von 464 nm schwächt sich die Transmission um etwa 20 % ab. Diese Abschwächung ist unter Tageslichtbedingungen für einen Brillenträger nicht bemerkbar, so dass es bei der Farbwahrnehmung des Brillenträgers zu keiner Beeinträchtigung kommt, beispielsweise in Form einer spektralen Veränderung. Die Reflexionskurve zeigt korrespondierend den Anteil an reflektiertem Blaulicht.

Fig. 6 zeigt im Vergleich die Reflexionskurven der Antireflexionsbeschichtung gemäß Beispiel 1, die eine Filterwirkung für blaues Licht aufweist, und der Antireflexionsbeschichtung gemäß Beispiel 6, die keine Filterwirkung für blaues Licht aufweist. Es ist deutlich zu erkennen, dass die Antireflexionsbeschichtung gemäß Beispiel 1 den Blaulichtanteil um 464 nm aufgrund einer erhöhten Reflexion signifikant verringert, wohingegen die Antireflexionsbeschichtung gemäß Beispiel 6 keine wesentliche Verringerung des Blaulichtanteils bewirkt.

**Beispiele**

Das Kunststoffsubstratmaterial war ein fertiges Brillenglas aus dem Polymer Polythiourethan (MR-8, Mitsui Chemical, Inc.), das einen kreisförmigen Durchmesser von 6,5 cm und eine Dicke in der Mitte von 1,5 mm aufwies. Bei einem fertigen Brillenglas handelt es sich gemäß DIN EN ISO 13666:2013-10, Absatz 8.4.6 um ein Brillenglas mit zwei fertig bearbeiteten optischen Flächen. Auf das Kunststoffsubstratmaterial war zunächst mit einem Polysiloxanbasierte Hartlack gemäß US 6,538,092 B1, Beispiel 1, in einer Schichtdicke von 2500 nm mittels Tauchbeschichtung aufgebracht worden. Die Trocknung und Härtung erfolgte sodann für 120 min bei einer Temperatur von 110°C in einem Standofen der Fa. Memmert GmbH + Co. KG, D-91126 Schwabach, Typ ULE 600.

Der mit dem Hartlack beschichtete fertige Brillenglas wurde sodann in der Beschichtungsanlage 1200-DLF, Firma Satisloh GmbH, D-35578 Wetzlar, gemäß Herstellerangaben angeordnet.

Bevor die eigentliche Abscheidung der Schichtmaterialien begann, wurde die Oberfläche im Vakuum bei einem Druck von kleiner $8 \times 10^{-4}$ mbar mit Ionen beaufschlagt. Die Ionen kamen aus einer Ionenquelle des End-Hall-Typs. Diese Ionenquelle ist Bestandteil der Beschichtungsanlage. Die Ionen waren Ar-Ionen mit einer Energie zwischen 80eV und 130 eV. Die auf die Substrate treffende Ionenstromdichte lag zwischen 20 und 60 $\mu$A/cm$^2$. Die Beaufschlagung mit Ar-Ionen erfolgte für 2 Minuten.

**Aufbringung einer Antireflexionsbeschichtung mit Filterwirkung für blaues Licht**

Nachfolgend wurden auf der Vorderfläche des mit dem Hartlack versehenen fertigen Brillenglases im Vakuum bei einem Druck von $4 \times 10^{-4}$ mbar insgesamt 10 bzw.11 Schichten aus $TiO_2$ und $SiO_2$ aufgebracht, wie in Tabelle 2 angegeben. Diese 10 bzw.11 Schichten stellten die erste Antireflexionsbeschichtung mit Filterwirkung für blaues Licht dar. Während der Beschichtung der $TiO_2$ Schichten wurde Sauerstoff als Reaktivgas zugegeben (20sccm), so dass die Schichten ohne Absorption im sichtbaren Spektralbereich aufwuchsen und somit optisch transparent waren. Während der Abscheidung des $TiO_2$ wurde das Substrat auch mit Ionen beaufschlagt. Diese Ionen kamen aus einer Ionenquelle des End-Hall-Typs. Diese Ionenquelle ist Bestandteil der Beschichtungsanlage. Die Ionen waren Sauerstoffionen mit einer Energie zwischen 80eV und 130 eV. Die auf die Substrate treffende Ionenstromdichte lag zwischen 20 und 60 $\mu$A/cm$^2$. Die Beaufschlagung der aufwachsenden $TiO_2$ Schicht mit Sauerstoffionen trug ebenso wie die Zugabe von Reaktivgas dazu bei, dass die $TiO_2$ Schichten als optisch transparente Schicht aufwuchsen. Dabei wurden Schichten aus $TiO_2$ und Schichten aus $SiO_2$ alternierend aufgebracht. Bei der ersten direkt auf den Hartlack aufgebrachten Metalloxidschicht handelte es sich um eine $TiO_2$-Schicht. Die jeweils aufgebrachte Schichtdicke der $TiO_2$-Schicht bzw. $SiO_2$-Schicht ist in [nm] in Tabelle 2 bzw. Tabelle 3 angegeben. Die Transmission bei 464nm bzw. die Transmission bei 450nm, der Lichtreflexionsgrad sowie der entsprechende Gelbwert G sowie die Halbwertsbreite sind ebenfalls in Tabelle 2 bzw. in Tabelle 3 angegeben. In nachstehenden Tabellen 2 und 3 bedeuten:

t/nm: Schichtdicke in [nm]
T (464nm): Transmission bei 464 nm
T (450nm): Transmission bei 450 nm
Lum R: Lichtreflexionsgrad
FWHM: Halbwertsbreite

**Tabelle 2: Antireflexionsbeschichtungen mit Filterwirkung für blaues Licht mit einem Reflexionsmaximum bei 464 nm**

|  | Beispiel 1 | Beispiel 2 | Beispiel 3 | Beispiel 4 |
|---|---|---|---|---|
| T (464nm) | 82% | 88% | 88% | 92% |
| Gelbwert G | 12 | 9 | 9 | 6 |
| Lum R in % | 2.3 | 1.7 | 1.7 | 1.4 |
| FWHM in nm | 48 | 48 | 48 | 45 |
|  | t/nm | t/nm | t/nm | t/nm |
| Hartlack | 3000 | 3000 | 3000 | 3000 |
| $TiO_2$ | 25 | 21 | 21 | 21 |
| $SiO_2$ | 26 | 26 | 26 | 25 |
| $TiO_2$ | 135 | 135 | 135 | 137 |
| $SiO_2$ | 18 | 18 | 18 | 25 |
| $TiO_2$ | 35 | 35 | 35 | 29 |
| $SiO_2$ | 57 | 57 | 57 | 57 |
| $TiO_2$ | 27 | 27 | 27 | 27 |
| $SiO_2$ | 34 | 34 | 34 | 32 |
| $TiO_2$ | 114 | 114 | 114 | 114 |
| $SiO_2$ | 80 | 80 | 90 | 80 |
| $TiO_2$ | 5 | 4 | -- | 4 |
| Top Coat | 5 | 5 | 5 | 5 |

**Tabelle 3: Antireflexionsbeschichtung mit Filterwirkung für blaues Licht mit einem Reflexionsmaximum bei 450 nm**

|  | Beispiel 5 |
|---|---|
| T (450nm) | 83% |
| Gelbwert G | 11 |
| Lum R in % | 1.1 |
| FWHM in nm | 40 |
|  | t/nm |
| Hartlack | 3000 |
| $TiO_2$ | 22 |
| $SiO_2$ | 21 |
| $TiO_2$ | 124 |
| $SiO_2$ | 25 |
| $TiO_2$ | 30 |
| $SiO_2$ | 59 |
| $TiO_2$ | 24 |
| $SiO_2$ | 30 |
| $TiO_2$ | 109 |

(fortgesetzt)

| | t/nm |
|---|---|
| SiO$_2$ | 92 |
| TiO$_2$ | -- |
| Top Coat | 5 |

## Aufbringung der Antireflexionsbeschichtung ohne Filterwirkung für blaues Licht

Nach der Aufbringung der Antireflexionsbeschichtung mit Filterwirkung für blaues Licht auf der Vorderfläche des mit Hartlack versehenen fertiges Brillenglases wurde dieser zur Beschichtung der Rückfläche mit einer herkömmlichen Antireflexionsbeschichtung ohne Filterwirkung für blaues Licht in der Beschichtungsanlage gewendet. Eine solche herkömmliche Beschichtung ist beispielsweise aus der US 2017/0219848 A1 (siehe Tabelle 3 und zugehörige Beschreibung) bekannt, deren Inhalt hiermit unter Bezugnahme aufgenommen ist.

Bei der Beschichtung wurde analog wie bei der Aufbringung der Antireflexionsbeschichtung mit Filterwirkung für blaues Licht verfahren. Zwischen der Hartlackschicht und der Antireflexionsbeschichtung wurde eine Haftschicht aus Cr/SiO$_2$ aufgedampft. Die jeweils aufgebrachten Schichtdicken sowie die jeweiligen Beschichtungsmaterialien sind in Tabelle 4 angegeben.

Tabelle 4: Antireflexionsbeschichtung ohne Filterwirkung für blaues Licht

| | **Beispiel 6** |
|---|---|
| | t/nm |
| **Hartlack** | 3000 |
| Haftschicht (Cr/SiO$_2$) | 0,6 |
| Al$_2$O$_3$ | 20,0 |
| SiO$_2$/Al$_2$O$_3$ | 170,0 |
| TiO$_2$ | 15,0 |
| SiO$_2$/Al$_2$O$_3$ | 47,0 |
| ITO | 3,0 |
| TiO$_2$ | 29,8 |
| SiO$_2$/Al$_2$O$_3$ | 114,0 |
| Top Coat | 5,0 |
| t/nm: Dicke in [nm] ITO: Indiumzinnoxid | |

## Aufbringung eines Top Coats

Als äußerste Schicht (Top Coat) wurde eine Schutzschicht, die sowohl hydrophob als auch oleophob ist, auf die erste bzw. zweite Antireflexionsschicht aufgebracht. Dieser Top Coat ist schmutzabweisend und erleichtert das Reinigen des Brillenglases.

Auf die erste Oberfläche des Brillenglases wurde eine 5 nm dicke Schicht aus Duralon[UltraTec] (Fa. Cotec GmbH, 63791 Karlstein a. Main, Deutschland) in der PVD-Anlage aufgebracht. Das Duralon[UltraTec] wurde gemäß Herstellerangaben in der PVD-Anlage angeordnet, im Vakuum unter Verdampfung erhitzt, so dass es sich nachfolgend auf der Oberfläche des Brillenglases niederschlägt. Danach wurde das Brillenglas gewendet und die zweite Oberfläche des Brillenglases ebenfalls mit einer 5 nm dicken Schicht aus Duralon[UltraTec] versehen.

Die Einstellung der jeweiligen Schichtdicke erfolgte über die Dauer der Bedampfung gemäß Herstellerangaben der Beschichtungsanlage. Die Bestimmung der jeweiligen Schichtdicke erfolgte dabei unter Verwendung eines Schwingquarzsystems (XTC Controller, Fa. Inficon, CH-7310 Bad Ragaz), das die Änderung der Frequenz eines elektrischen Schwingquarzes misst, wobei sich die Frequenz mit der Schichtdicke der jeweils aufwachsenden Antireflexionsbeschichtung ändert. Der Schwingquarz wird während des Beschichtungsvorgangs in analogerweise mitbeschichtet und dabei dessen Frequenzänderung gemessen.

Zur Kontrolle der aufgebrachten Antireflexionsbeschichtung mit Filterwirkung für blaues Licht wurde eine Messung durchgeführt: Die Messung der Reflexionskurve erfolgte mit dem Reflexionsspektrometer F10-AR-UV der Firma Filmetrics, Inc. (San Diego, CA 92121, USA), indem der Messkopf, nach Kalibrierung des Gerätes gemäß Herstellerangaben, direkt nach Herstellung des Interferenzschichtsystems auf einen beschichteten Bereich des fertigen Brillenglases aufgesetzt wurde. Diese Messung erfolgte innerhalb von 5 min nach Belüften der Vakuumbeschichtungsanlage, nachdem die Beschichtung beendet wurde.

Die Berechnung der jeweils aufgebrachten Schichtdicken erfolgte mit dem Softwareprogramm OptiLayer, Version 12.37, der OptiLayer GmbH. Für die Berechnung wurde zunächst eine Zielreflexionskurve eingegeben. Das Softwareprogramm verfügte über Algorithmen, den Schichtaufbau einer Antireflexionsbeschichtung unter Berücksichtigung von Randbedingungen berechnen. Für die Berechnung wurde der Algorithmus "gradual evolution" ausgewählt. Als Randbedingung wurden das Substratmaterial, die Primerschicht mit deren optischen Eigenschaften und Schichtdicke, die Hartlackschicht mit deren optischen Eigenschaften und Schichtdicke, sowie die Verwendung von $TiO_2$ und $SiO_2$ als Schichtmaterialien vorgegeben. Für die Berechnung der Beispiele 1 bis 4 wurden die folgenden Brechzahlen n bei der Wellenlänge des Reflexionmaximums von 464 nm zu Grunde gelegt: $TiO_2$: n = 2.52, $SiO_2$: n = 1.47, Top Coat: n = 1.38, Hartlack: n = 1.61 und Substrat: n = 1.605. Für die Berechnung des Beispiels 5 wurden die folgenden Brechzahlen n bei der Wellenlänge des Reflexionmaximums von 450 nm zu Grunde gelegt: $TiO_2$: n = 2.54, $SiO_2$: n = 1.475, Top Coat: n = 1.38, Hartlack: n = 1.62 und Substrat: n = 1.63. Der Imaginärteil k ist für alle Materialien k = 0. Die maximale Anzahl der Schichten wurde auf 10 bzw. 11 begrenzt. Der Algorithmus optimierte die Anzahl der Schichten und deren Dicke, bis eine minimale Abweichung zur Zielkurve erreicht wurde. Als Ergebnis dieser Optimierung erhielt man die in Tabelle 2 angegebenen Schichtdicken. Die Ergebnisse der gemessenen Reflexionskurve stimmten mit der berechneten Zielreflexionskurve überein.

**Patentansprüche**

1.  Brillenglas für ein Auge eines Brillenträgers mit einer Vorderfläche und einer Rückfläche, wobei die Vorderfläche des Brillenglases dem Auge abgewandt ist und die Rückfläche des Brillenglases dem Auge zugewandt ist und wobei das Brillenglas ein optisches Linsensubstrat aus oder mit mineralischem Material und/oder organischem Material umfasst,
    **dadurch gekennzeichnet,**
    **dass** das Brillenglas wenigstens eine erste Antireflexionsbeschichtung und wenigstens eine zweite Antireflexionsbeschichtung aufweist, wobei die wenigstens eine erste Antireflexionsbeschichtung eine Filterwirkung für blaues Licht in einem Wellenlängenbereich von 430 nm bis 530 nm oder in einem Wellenlängenbereich von 400 nm bis 500 nm aufweist.

2.  Brillenglas nach Anspruch 1,
    **dadurch gekennzeichnet,**
    **dass** die wenigstens eine erste Antireflexionsbeschichtung mit Filterwirkung für blaues Licht wenigstens zwei optisch transparenten Schichten aufweist, wobei die optisch transparenten Schichten flächig übereinander angeordnet sind, wobei die optisch transparenten Schichten im Wesentlichen aus Metalloxid oder mehreren Metalloxiden bestehen, wobei wenigstens eine erste optisch transparente Schicht einen Brechungsindex $n_1$ und wenigstens eine zweite optisch transparente Schicht einen Brechungsindex $n_2$ aufweist und wobei sich der erste Brechungsindex $n_1$ und der zweite Brechungsindex $n_2$ um wenigstens 0,1 unterscheiden.

3.  Brillenglas nach einem der Ansprüche 1 oder 2,
    **dadurch gekennzeichnet,**
    **dass** die wenigstens eine erste Antireflexionsbeschichtung mit Filterwirkung für blaues Licht wenigstens 2 niedrigbrechende optisch transparente Schichten mit einem Brechungsindex $n_1$ < 1,8 und wenigstens 2 hochbrechende optisch transparente Schichten mit einem Brechungsindex $n_2 \geq 1,8$ aufweist.

4.  Brillenglas nach einem der Ansprüche 2 oder 3,
    **dadurch gekennzeichnet,**
    **dass** die niedrigbrechenden optisch transparenten Schichten der wenigstens einen ersten Antireflexionsbeschichtung mit Filterwirkung für blaues Licht einen Brechungsindex $n_1$ aus einem Bereich von 1,3 bis 1,78 aufweisen und vorzugsweise aus der Gruppe, die aus Siliziumoxid, Aluminiumoxid, Magnesiumfluorid, und Mischungen davon besteht, ausgewählt sind.

**5.** Brillenglas nach einem der Ansprüche 2 bis 4,
**dadurch gekennzeichnet,**
**dass** die hochbrechenden optisch transparenten Schichten der wenigstens einen ersten Antireflexionsbeschichtung mit Filterwirkung für blaues Licht einen Brechungsindex $n_2$ aus einem Bereich von 2,0 bis 2,9 aufweisen und vorzugsweise aus der Gruppe, die aus Titanoxid, Eisenoxid, Nioboxid, Tantaloxid, Zirkoniumoxid, Chromoxid, Ceroxid, Kobaltoxid, und Mischungen davon besteht, ausgewählt sind.

**6.** Brillenglas nach einem der Ansprüche 2 bis 5,
**dadurch gekennzeichnet,**
**dass** die niedrigbrechenden und hochbrechenden optisch transparenten Schichten der wenigstens einen ersten Antireflexionsbeschichtung mit Filterwirkung für blaues Licht alternierend übereinander und vorzugsweise aneinander angrenzend angeordnet sind.

**7.** Brillenglas nach einem der Ansprüche 2 bis 6,
**dadurch gekennzeichnet,**
**dass** die Schichtdicke jeder optisch transparenten Schicht der wenigstens einen ersten Antireflexionsbeschichtung mit Filterwirkung für blaues Licht in einem Dickenbereich von 5 nm bis 500 nm liegt.

**8.** Brillenglas nach einem der Ansprüche 1 bis 7,
**dadurch gekennzeichnet,**
**dass** die wenigstens eine erste Antireflexionsbeschichtung mit Filterwirkung für blaues Licht im Wesentlichen aus Metalloxid(en) bestehende optisch transparente Schichten, die jeweils Metalloxid(e) in einer Menge von 95 bis 100 Gew.-%, jeweils bezogen auf das Gesamtgewicht der jeweiligen optisch transparenten Schicht, enthalten, aufweist.

**9.** Brillenglas nach einem der Ansprüche 1 bis 8,
**dadurch gekennzeichnet,**
**dass** die wenigstens eine erste Antireflexionsbeschichtung mit Filterwirkung für blaues Licht 4 bis 100 optisch transparente Schichten aufweist oder daraus besteht.

**10.** Brillenglas nach einem der Ansprüche 2 bis 9,
**dadurch gekennzeichnet**,
die Reflektivitätskurve der ersten Antireflexionsbeschichtung in einem Wellenlängenbereich von 430 nm bis 530 nm oder in einem Wellenlängenbereich von 400 nm bis 500 nm jeweils ein Reflektivitätsmaximum mit einer Halbwertsbreite (FWHM) aus einem Bereich von 20 nm bis $\leq$ 70 nm aufweist.

**11.** Brillenglas nach einem der Ansprüche 1 bis 10,
**dadurch gekennzeichnet,**
**dass** die wenigstens eine erste Antireflexionsbeschichtung mit Filterwirkung für blaues Licht die Transmission für blaues Licht bei 464 nm oder bei 450 nm durch das Brillenglas jeweils in einem Bereich wenigstens von 5 % bis maximal 40 % verringert.

**12.** Brillenglas nach einem der Ansprüche 1 bis 11,
**dadurch gekennzeichnet,**
**dass** die wenigstens eine erste Antireflexionsbeschichtung mit Filterwirkung für blaues Licht auf der Vorderfläche des Brillenglases und die wenigstens eine zweite Antireflexionsbeschichtung auf der Rückfläche des Brillenglases angeordnet ist.

**13.** Brillenglas nach einem der Ansprüche 1 bis 12,
**dadurch gekennzeichnet,**
**dass** die wenigstens eine erste Antireflexionsbeschichtung mit Filterwirkung für blaues Licht die Transmission für blaues Licht bei 464 nm oder bei 450 nm durch das Brillenglas jeweils in einem Bereich wenigstens von 5 % bis maximal 40 % verringert und jeweils einen maximalen Gelbwert G von nicht mehr als 12 aufweist.

**14.** Brillenglas nach einem der Ansprüche 1 bis 13,
**dadurch gekennzeichnet,**
**dass** die wenigstens eine erste Antireflexionsbeschichtung mit einer Filterwirkung für blaues Licht eine Diffusivität auf, die das Aufnehmen von durch die erste Antireflexionsbeschichtung hindurchtretenden Wassermolekülen in das Linsensubstrat und das Freigeben von Wassermolekülen aus dem Linsensubstrat durch die erste Antireflexionsbeschichtung hindurch aus einer auf der dem Linsensubstrat abgewandten Seite der Antireflexionsbeschichtung angeordneten Luftatmosphäre mit einer Feuchtigkeitsstromdichte gewährleistet, die ausgehend von dem Gleichgewichtszustand der Menge der in dem Linsensubstrat in einer Luftatmosphäre bei 23°C und 50% relativer Luftfeuchte eingelagerten Wassermoleküle das Einstellen des Gleichgewichtszustands der Menge der in dem Linsensubstrat in einer Luftatmosphäre bei 40°C und 95% relativer Luftfeuchte eingelagerten Wassermoleküle innerhalb eines Zeitintervalls bewirkt, das um nicht mehr als eine Zeitspanne der Länge $\Delta t = 10h$, bevorzugt um nicht mehr als eine Zeitspanne der Länge $\Delta t = 9h$ oder $\Delta t = 8h$ oder $\Delta t = 7h$ oder $\Delta t = 6h$ oder $\Delta t = 5h$ oder $\Delta t = 4h$ oder $\Delta t = 3h$ oder $\Delta t = 2h$, besonders bevorzugt um nicht mehr als eine Zeitspanne der Länge $\Delta t = 1h$, länger ist als das für das Einstellen dieses Gleichgewichtszustands unter entsprechenden Bedingungen bei einem zu dem Linsensubstrat identischen unbeschichteten Linsensubstrat erforderliche Zeitintervall.

15. Verfahren zur Herstellung eines Brillenglases mit wenigstens einer Filterwirkung für blaues Licht, wobei das Verfahren folgende Schritte umfasst:

(a) Bereitstellen eines optischen Linsensubstrates mit einer Vorderfläche und einer Rückfläche,
(b) optional Aufbringen einer Primerschicht auf der Vorderfläche und/oder der Rückfläche,
(c) optional Aufbringen einer Hartlackschicht auf der Primerschicht oder direkt auf der Vorderfläche und/oder Rückfläche des optischen Linsensubstrats,
(d) Aufbringen wenigstens einer ersten Antireflexionsbeschichtung mit Filterwirkung für blaues Licht in einem Wellenlängenbereich von 430 nm bis 530 nm oder in einem Wellenlängenbereich von 400 nm bis 500 nm, vorzugsweise auf der Vorderfläche,
(e) Aufbringen wenigstens einer zweiten Antireflexionsbeschichtung, vorzugsweise auf der Rückfläche,
(f) optional Aufbringen von wenigstes einer weiteren Schicht.

Fig. 1

Fig. 2

**Fig. 3**

**Fig. 4**

**Fig. 5**

**Fig. 6**

**Europäisches Patentamt**
**European Patent Office**
**Office européen des brevets**

# EUROPÄISCHER RECHERCHENBERICHT

Nummer der Anmeldung

EP 19 19 2734

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 514 612 A1 (HOYA LENS THAILAND LTD [TH]) 24. Juli 2019 (2019-07-24) | 1-9, 11-13,15 | INV. G02C7/02 |
| Y | * Absätze [0014], [0018], [0021], [0025] - [0031]; Abbildungen 2, 3 * | 14 | G02B1/115 B29D11/00 |
| A | ----- | 10 | G02C7/10 |
| Y | EP 2 602 654 A1 (ESSILOR INT [FR]; UNIV PARIS 6 PIERRE ET MARIE CURIE [FR]) 12. Juni 2013 (2013-06-12) * Absätze [0009], [0019], [0031], [0032], [0060], [0061] * * Absätze [0071], [0103], [0114], [0120], [0175], [0179] * ----- | 1-15 | |
| Y | EP 2 801 846 A1 (ZEISS CARL VISION INT GMBH [DE]) 12. November 2014 (2014-11-12) | 14 | |
| A | * Absätze [0007] - [0011], [0013] - [0018] * * Absätze [0028] - [0033] * ----- | 2-9 | |
| Y | WO 2019/032348 A1 (UNIV UTAH RES FOUND [US]) 14. Februar 2019 (2019-02-14) * Absätze [0020], [0090], [00104] - [00106], [00114] * ----- | 1-15 | RECHERCHIERTE SACHGEBIETE (IPC) G02C G02B B29D |
| A | US 2008/221674 A1 (BLUM RONALD D [US] ET AL) 11. September 2008 (2008-09-11) * Absätze [0030], [0031], [0095], [0098], [0102] * ----- | 13 | |

Der vorliegende Recherchenbericht wurde für alle Patentansprüche erstellt

| Recherchenort | Abschlußdatum der Recherche | Prüfer |
|---|---|---|
| München | 17. Februar 2020 | Vazquez Martinez, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 2734

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-02-2020

| Im Recherchenbericht angeführtes Patentdokument | Datum der Veröffentlichung | Mitglied(er) der Patentfamilie | Datum der Veröffentlichung |
|---|---|---|---|
| EP 3514612 A1 | 24-07-2019 | CN 110140079 A | 16-08-2019 |
| | | EP 3514612 A1 | 24-07-2019 |
| | | JP WO2019103105 A1 | 21-11-2019 |
| | | KR 20190069402 A | 19-06-2019 |
| | | US 2019219841 A1 | 18-07-2019 |
| | | WO 2019103105 A1 | 31-05-2019 |
| EP 2602654 A1 | 12-06-2013 | AU 2012348560 A1 | 17-07-2014 |
| | | AU 2016204243 A1 | 14-07-2016 |
| | | AU 2018203487 A1 | 07-06-2018 |
| | | BR 112014013881 A2 | 13-06-2017 |
| | | CN 103998974 A | 20-08-2014 |
| | | CN 106842617 A | 13-06-2017 |
| | | EP 2602654 A1 | 12-06-2013 |
| | | JP 2015507217 A | 05-03-2015 |
| | | JP 2019061232 A | 18-04-2019 |
| | | KR 20140104998 A | 29-08-2014 |
| | | US 2014300857 A1 | 09-10-2014 |
| | | WO 2013084177 A1 | 13-06-2013 |
| EP 2801846 A1 | 12-11-2014 | CN 104142525 A | 12-11-2014 |
| | | DE 102013208310 A1 | 06-11-2014 |
| | | DK 2801846 T3 | 21-10-2019 |
| | | EP 2801846 A1 | 12-11-2014 |
| | | EP 3561552 A1 | 30-10-2019 |
| | | HU E045721 T2 | 28-01-2020 |
| | | PL 2801846 T3 | 31-01-2020 |
| | | PT 2801846 T | 17-09-2019 |
| | | US 2014327876 A1 | 06-11-2014 |
| WO 2019032348 A1 | 14-02-2019 | KEINE | |
| US 2008221674 A1 | 11-09-2008 | US 2008221674 A1 | 11-09-2008 |
| | | US 2012120515 A1 | 17-05-2012 |
| | | US 2015238308 A1 | 27-08-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008067109 A1
- WO 2013171434 A1
- WO 2008067109 A
- US 5316791 A
- DE 102011083960 A1
- US 6538092 B1
- US 20170219848 A1

**In der Beschreibung aufgeführte Nicht-Patentliteratur**

- **GEORGE C. BRAINARD et al.** Action Spectrum for Melatonin Regulation in Humans: Evidence for a Novel Circadian Photoreceptor. *The Journal of Neuroscience,* 15. August 2001, vol. 21 (16), 6405-6412

- **OLIVER, W.C. ; PHARR, G.M.** Measurement of hardness and elastic modulus by instrumented indentation: Advances in understanding and refinements to methodology. *J. Mater. Res.,* Januar 2004, vol. 19 (1), 3-20
- **E.S. GADELMAWLA et al.** Roughness parameters. *Journal of Materials Processing Technology,* 2002, vol. 123, 133-145